# EUROPEAN PATENT APPLICATION

(11) **EP 4 845 098 A2**
(43) Date of publication of application: **25.11.2026**
(21) Application number: 26179320.2
(22) Date of filing: 18.05.2026
(51) Int. Cl.: H04L 9/40, H04L 61/103, H04L 61/5076, H04L 61/5014, H04L 101/33, H04L 101/622

(54) **MANAGING ACCESS TO EDGE DEVICES**

(30) Priority: 19.05.2025 US 202519211296
(71) Applicant: HONEYWELL INTERNATIONAL INC., Charlotte, NC 28202 (US)
(72) Inventor: PRUSTY, Abinash, Charlotte, 28202 (US); DATTA, Indranil, Charlotte, 28202 (US)
(74) Representative: Haseltine Lake Kempner LLP

(57) **Abstract**

Example techniques for managing access to edge devices are described. A request to register an edge device is received that includes unique identifier and IP address of the edge device. A device address is generated based on the identifier to enable access to the edge device, and the IP address is mapped to device address. Upon receiving a notification from the edge device, a request is sent to a certificate authority (CA) sever to issue an identity certificate for the device address. The identity certificate is then associated with the edge device. If the IP address changes, the mapping between device address and the IP address is updated while maintaining the association of the identity certificate with the edge device unaltered.

## Description

### BACKGROUND

Edge devices are computing systems that operate at a periphery of networks, closer to source of data generation or end user. The edge devices serve as critical components in modern distributed computing architectures, processing and analyzing data locally before transmitting relevant information to centralized systems or cloud servers. The edge devices encompass a wide range of technologies, including, but not limited to, Internet of Things (IoT) sensors, smartphones, industrial controllers, specialized equipment, and the like. A smart thermostat in a home office, an onboard computer of an autonomous vehicle, or a factory floor robot all may qualify as the edge devices. The edge devices are designed to perform specific tasks, collect data, or provide services in their immediate environment, often with limited computational resources and power constraints.

The primary function of the edge devices is to capture, process, and analyze the data in real-time. This has several advantages, including reduced latency, improved privacy, and more efficient use of network bandwidth. For example, a surveillance camera with built-in facial recognition may process video streams locally, only sending alerts or relevant footage to a cloud server to which the surveillance camera is connected when specific events are detected. In an industrial facility, the edge devices may play a crucial role in monitoring performance of equipments installed in the industrial facility, optimizing production processes, and ensuring safety compliance. An example of this may be a vibration sensor on a manufacturing machine that may detect anomalies and trigger maintenance alerts without constant communication with central systems. This capability may be valuable in environments where quick response times are critical, or network connectivity may be intermittent.

Growth of the edge devices has led to a concept of edge computing, where data processing and analysis occur closer to data source rather than in centralized cloud servers. This distributed computing model may enable more responsive and context-aware applications. For example, augmented reality applications on smartphones may process real-time surveillance camera feeds and overlay information with minimal latency by leveraging the capabilities of the edge computing.

As the edge devices become more prevalent and sophisticated, they are driving innovation in various sectors. In healthcare, wearable devices may monitor patient vital signs and provide real-time health insights. In agriculture, soil sensors and drones may collect and process data to optimize irrigation and crop management. Smart city initiatives utilize networks of the edge devices to manage traffic flow, monitor air quality, and enhance public safety. The continued evolution of the edge devices is expected to enable new applications and services across numerous industries, changing how data is collected, processed, and utilized in our increasingly connected world.

### SUMMARY

The details of some embodiments of the invention described in this specification are set forth in the accompanying drawings and the description below. Other features, aspects, and advantages of the invention will become apparent from the description, the drawings, and the claims.

The present subject matter relates to methods, systems, and non-transitory computer-readable media for managing access to edge devices.

In accordance with an embodiment of the present subject matter, a system for managing access to edge devices includes a communication module to receive a request to register an edge device. The request to register the edge device includes metadata corresponding to the edge device. The metadata includes a unique identifier associated with the edge device and an internet protocol (IP) address of the edge device. The system further includes a device registration module. The device registration module is to generate, based on the unique identifier, a device address for the edge device. In an example, the device address is to provide access to the edge device. Further, the device registration module is to map the IP address to the device address. Furthermore, the system includes a certification management module. The certification management module is to receive, from the edge device, a notification to generate an identity certificate for the device address. In response to the notification, the certification management module is to obtain an identity certificate for edge device corresponding to the device address from a certificate authority (CA) server and associate the identity certificate with the edge device. In response to a notification of an update in the IP address for the edge device, the device registration module updates the mapping between the device address and the IP address to reflect the updated IP address.

In accordance with another aspect of the present invention, a method for managing access to edge devices includes receiving, by a system for managing access to the edge devices, a request to register an edge device. The request includes a unique identifier of the edge device and an internet protocol (IP) address of the edge device. The method further includes generating, by the system, a device address for the edge device based on the unique identifier, the device address to provide access to an embedded server of the edge device. Furthermore, the method includes mapping, by the system, the IP address to the device address. The method also includes receiving, by the system, a notification from the edge device to generate an identity certificate for the device address. The method further includes sending, by the system, a request to a certificate authority (CA) server to issue the identity certificate for the device address. The method includes associating, by the system, the identity certificate with the edge device upon receiving the identity certificate from the CA server. The method also includes detecting, by the system, an update to the IP address of the edge device and updating the mapping between the device address and the updated IP address, while maintaining the association of the identity certificate with the edge device unaltered.

In accordance with an embodiment of the present invention, a non-transitory computer-readable medium contains instructions that enable a processing resource to receive a request to register an edge device, the request including metadata corresponding to the edge device. In an example, the metadata includes a unique identifier associated with the edge device and an internet protocol (IP) address of the edge device. The instructions are further executable to generate, based on the unique identifier, a device address that is usable to provide access to the edge device and to map the IP address of the edge device to the device address. The instructions are further executable to obtain, in response to a notification from the edge device, an identity certificate for the edge device from a certificate authority (CA). In an example, the identity certificate corresponds to the device address of the edge device. The instructions are further executable to detect a change in the IP address of the edge device and to map the changed IP address of the edge device to the device address.

Thus, allowing access to an edge device through a device address enables seamless and reliable communication with the edge device, regardless of changes to underlying IP address of the edge device. By mapping the device address to a current IP address of the edge device and updating the mapping upon changes in the IP address of the edge device, uninterrupted access to the edge device is maintained without requiring manual reconfiguration. This simplifies edge device management, especially in dynamic network environments where the IP address of the edge device may change due to DHCP refreshes or edge device reboots. Additionally, the use of a consistent device address streamlines secure access, as the edge device may be associated with a valid identity certificate linked to the device address, helping to avoid browser warnings and trust issues.

Additional features and advantages are realized through the concepts of the present subject matter, including automated device address management, dynamic IP address mapping, and streamlined certificate handling for secure access to the edge devices. These improvements reduce manual configuration efforts, minimize service interruptions due to IP address changes, and enhance communication efficiency by maintaining continuous, secure connections to the edge devices. Other embodiments and aspects of the present subject matter are described in detail herein and are considered a part of the claimed present subject matter.

### BRIEF DESCRIPTION OF FIGURES

The following detailed description references the drawings, wherein:
Fig. 1 illustrates a network environment for implementing example techniques for managing access to edge devices, in accordance with an example implementation of the present subject matter;
Fig. 2 illustrates a system for managing access to the edge devices, in accordance with an example implementation of the present subject matter;
Fig. 3 illustrates the system for managing access to the edge devices, in accordance with another example implementation of the present subject matter;
Fig. 4 illustrates a signal flow in a process of accessing the edge devices, in accordance with an example implementation of the present subject matter;
Fig. 5 illustrates a method for managing access to edge devices, in accordance with an example implementation of the present subject matter;
Fig. 6 illustrates a method for accessing data from an edge device by a user device which is in a same network as the edge device, in accordance with an example implementation of the present subject matter;
Fig. 7 illustrates a method for accessing the data from the edge device by a user device which is not in the same network as the edge device, in accordance with an example implementation of the present subject matter;
Fig. 8 illustrates a method for updating a mapping between an internet protocol address of the edge device and device address of the edge device, in accordance with an example implementation of the present subject matter; and
Fig. 9 illustrates a computing environment for managing access to edge devices, in accordance with an example implementation of the present subject matter.

The detailed description is provided with reference to the accompanying figures. In the figures, the left-most digit(s) of a reference number identifies the figure in which the reference number first appears. The same numbers are used throughout the drawings to reference like features and components.

### DETAILED DESCRIPTION

Edge devices are physical communication components, such as sensors, surveillance cameras, routers, and loT devices, that collect, process, and transmit data at outer edges of a network, i.e., close to where the data is generated. The edge devices play a critical role in applications like smart homes, industrial automation, healthcare monitoring, smart cities, and the like. By processing some of the data locally, the edge devices may reduce the need to transmit all the locally collected data to a centralized server or cloud server, which improves response times and lowers bandwidth costs. This local processing is essential for real-time or latencysensitive applications, such as autonomous vehicles or remote patient monitoring, where immediate decisions may be made without waiting for a response from a distance server.

Accessing the edge devices is essential to fully leverage their capabilities and keep the edge devices running smoothly. Administrators and service providers may need remote access to the edge devices, collect and analyse the data, perform firmware updates, and troubleshoot issues. For example, in a wind farm, operators may need to access turbine sensors to optimize performance or detect early signs of mechanical failure. Similarly, in healthcare, clinicians may need access wearable devices to adjust patient care parameters in real time. Without secure and reliable access to the edge devices, managing and scaling the edge devices may be difficult, and organizations may lose the agility and efficiency that edge computing provides. Access ensures that the edge devices stay up-to-date, secure, and continuously aligned with evolving operational needs.

Currently, the edge devices may be accessed using two primary methods: through an Internet of Things (IoT) servers or via an embedded server. Both approaches offer distinct advantages and limitations, depending on the type of an edge device, the amount of data the edge device generates, and the specific application requirements. The loT servers provide a centralized way to manage and control the edge devices across various locations through an online cloud server. In this setup, the edge devices connect to internet and communicate with an loT server (often hosted in the cloud server), which acts as an intermediary between users and the edge devices. The users access the edge devices by logging into the loT server, where the users may send commands, retrieve the data, and configure settings. For example, a smart thermostat in a home may be adjusted via a mobile app, which interacts with the loT server, relays input from a user, and updates the thermostat accordingly.

Using the loT servers to access the edge devices is highly convenient, especially for large-scale deployments where the edge devices are spread across multiple sites. The users may manage hundreds or even thousands of edge devices from a single dashboard, regardless of physical distance. The loT servers also offer features like edge device health monitoring, over-the-air updates, and data analytics, making them attractive for many applications.

However, using the loT servers to manage access to the edge devices has certain drawbacks that may become severe in real-time or high-data scenarios. One of the biggest limitations of the loT servers is latency. When the data travels from the edge device to the loT server, which, as explained previously, is usually implemented or hosted on the cloud server, and back to the user, it introduces delays, especially for bandwidth-intensive applications. For example, a surveillance camera streaming live video, sending high-resolution footage to the loT server and then back to a user adds unnecessary lag, which may be detrimental for surveillance or safety systems. Additionally, if the internet connection fails or the cloud server experiences downtime, the edges devices become completely inaccessible, leaving the users without control or visibility. Cost is another issue. Constantly transmitting the data to the loT server hosted on the cloud server consumes bandwidth, and storing or processing that data incurs ongoing expenses. For edge devices generating large volumes of the data, these costs may quickly add up, making loT solutions financially unsustainable for high-throughput applications. Security may also be a concern, as the data traversing the internet is more vulnerable to breaches, adding another layer of complexity with encryption and secure tunnelling requirements.

Embedded servers offer a more direct and reliable method for accessing the edge devices. The embedded server may be understood as a small web server running directly on the edge device, allowing the users to interact with the edge device over a local network without relying on an external cloud server. A familiar example of the embedded server may be a home router. A user may access settings of the home router by entering local internet protocol (IP) address of the home router into a web browser on a user device, interacting with the embedded web interface of the home router, for example, to configure network settings or view devices connected to the home router. Accessing the edge devices using the embedded server drastically reduces latency, as the users interact with the edge devices in real time without waiting for cloud round trips. For high-throughput devices like industrial sensors or surveillance cameras, using the embedded server may be invaluable. For example, a surveillance camera with an embedded server may stream live footage directly to a user connected to a same local network as the surveillance camera, allowing for near-instant responsiveness. With the embedded server, even if the internet connection goes down, the users may still be able to access and control the edge devices locally, thereby ensuring continuous access to the edge devices and avoiding the availability issues inherent to cloud-dependent edge devices.

The embedded servers are useful in scenarios where the edge devices generate large amounts of data that do not need to leave the local network. For example, an industrial machine sensor collecting real-time performance metrics may use an embedded server to store, visualize, and analyse the data locally, eliminating the need for constant communication with a cloud based loT server. This local data handling not only reduces bandwidth usage but also cuts down on cloud storage costs, making the embedded servers a more cost-effective solution for data-heavy applications.

Because the edge devices with the embedded server function independently of the internet, the edge devices may remain accessible even during network outages or loT server failures. This ensures uninterrupted control and monitoring, which is important for mission-critical systems like healthcare monitors or security systems. Additionally, by reducing the need for constant internet communication, the embedded servers may minimize bandwidth usage, leading to substantial cost savings which is a crucial factor for large-scale or high-data deployments.

While embedded servers offer faster, more reliable access to the edge devices, accessing the edge devices through the embedded servers also has several challenges, particularly related to authentication, trust establishment, and device addressing. These challenges may make managing the edge devices more complex. When accessing an embedded server of an edge device through a web browser, it is essential to encrypt the connection using a cryptographic protocol, such as secure sockets layer (SSL) or transport layer security (TLS). However, properly configuring the TLS-enabled embedded server to avoid security warnings for a web browser may be difficult. If the edge device uses a self-signed identity certificate or an identity certificate not issued by a trusted certificate authority (CA), the web browser may display a warning message, such as: "Your connection is not private." The warning may not necessarily be due to the lack of encryption as the embedded server may indeed be encrypting the data. Instead, the warning may appear because the identity certificate is either self-signed or issued by an untrusted authority, causing the web browser to reject the identity certificate. While the configuration successfully enables the encryption, it fails to establish trust. In such cases, the users may either need to bypass the warning, weakening security, or struggle to manually configure the identity certificate, adding complexity to device management.

Thus, successful encryption of the embedded server alone is not enough to establish a fully secure connection. The web browser needs to also trust the embedded server to prevent warning messages and avoid disruptions in accessing the device. For example, consider a scenario where a user selects a surveillance camera from an edge device tree to display a live image. Even if the user configure the embedded server of the surveillance camera with a self-signed identity certificate, the web browser may still show a warning message like: "The identity certificate presented by this device is not issued by a trusted certificate authority." This warning may interrupt the surveillance camera access flow and may require manual intervention to proceed. In environments with many edge devices, manually handling these warnings for each edge device may be impractical, making trust establishment a critical aspect of secure and seamless edge device management.

Additionally, domain name or internet protocol (IP) address entered in a unique resource locator (URL) of the web browser to access the edge device needs to match domain name or IP address listed in the identity certificate of the edge device. If there is a mismatch, the web browser may block access to the edge device or display a warning message. For example, if a user attempts to access a smart sensor at IP address 192.168.1.100, but the identity certificate is issued for the domain name "sensor.local," the web browser may refuse to establish a secure connection. This mismatch may interrupt access to the smart sensor, preventing the user from interacting with or managing the smart sensor through the web browser. In such cases, the user may need to manually bypass the warning or reconfigure the identity certificate to match the address of the embedded device, adding complexity to edge device management and compromising security if warnings are ignored.

Another challenge in accessing the edge devices using the embedded server is related to expiration of identity certificates. The certificates have expiration dates, and the expired identity certificates break secure communication. The users are required to renew certificates regularly, which adds to the edge device maintenance overhead. In environments with numerous edge devices, keeping track of identity certificate expiration dates and manually updating the identity certificates on each edge device may become a time-consuming and error-prone process. An edge device going offline simply because its identity certificate expired may cause unexpected downtime and disrupt critical operations.

Furthermore, accessing the edge devices via the embedded server typically requires using the IP address of the edge device. For stable access, the edge device needs to have a static IP, but assigning static IPs manually is a labour-intensive process, especially in large networks with many edge devices. If the edge devices are assigned IP address dynamically via dynamic host configuration protocol (DHCP), the IP address may change after a reboot or DHCP lease renewal, making it difficult to reconnect to the edge devices without manually discovering the new IP address. For example, in a home automation setup with smart lights, sensors, and surveillance cameras, if a user tries to access a surveillance camera at 192.168.1.50, but a router assigns a new IP address to the surveillance camera after a power outage, the previous IP address of the surveillance camera becomes useless. The user may need to log into the router to find the new IP address or use a network scanning tool which is a cumbersome process that may be especially problematic in larger deployments.

Thus, while the embedded servers provide fast, local access to the edge devices, the associated complexities around trust, identity certificates, and IP address management add layers of difficulty. Therefore, there is a need to for a technique that may be used to address these challenges.

To this end, the present subject matter describes techniques for managing access to edge devices by automating device address assignment, dynamically updating IP address mappings, and handling identity certificate management. The present subject matter addresses limitations associated with the accessing of the edge devices using the conventional embedded servers by reducing manual configuration efforts, preventing connection disruptions due to IP address changes, and simplifying trust establishment for secure communication. These enhancements improve the reliability, security, and efficiency of accessing and managing the edge devices.

The present subject matter includes receiving a request to register an edge device. In an example, a system where the request to register the edge device is received may be a cloud server. In an example, the request may include metadata corresponding to the edge device. The metadata may include a unique identifier associated with the edge device and an internet protocol (IP) address of the edge device. In an example, the unique identifier for the edge device may be its serial number or device (NIC) specific MAC address.

Further, upon receiving the request to register the edge device at the cloud server, a registration process may begin. In an example, the registration process may include generating a device address for the edge device based on the unique identifier of the edge device. In an example, the device address may be a unique resource locator (URL) that may be created by the cloud server and is registered for the edge device for accessing embedded server of the edge device. In another example, the URL may be "abcde.sub.domain.tld" where "abcde" may the unique device identifier of the edge device, "sub" may be the product specific subdomain and "domain.tld" may be the organizations domain. Furthermore, registration process may also include mapping the IP address of the edge device to the device address created on the cloud server.

Once the edge device registered on the cloud server, the URL of the edge device created on the cloud server may need to be certified. In an example, to initiate the process of certifying the URL of the edge device, the edge device may issue a notification to the cloud server to generate an identity certificate for the device address (i.e., URL of the edge device). Upon receiving the notification from the edge device, the cloud server sends a request to a certificate authority (CA) server to issue the identity certificate for the device address. In an example, CA server may authenticate the request and issue the identity certificate from the device address. In an example, upon receiving the identity certificate from the CA server, the cloud server may update the edge device with the identity certificate.

Accordingly, by utilizing the identity certificates from a trusted CA, the present subject matter eliminates the need for self-signed certificates, which often trigger security warnings. This provides authenticated identity for the edge devices, enables secure HTTPS communication, and integrates seamlessly with standard security practices. Users may access the edge devices through their unique URLs without encountering certificate warnings, resulting in a smooth and secure experience. The centralized management of certificates allows for scalability across numerous devices while maintaining a consistent trust model that works across various network configurations. This solution effectively addresses the challenges of device authentication and secure access in edge computing environments.

Further, whenever there is a change in the IP address of the edge device, the cloud server may receive a notification of an updated IP address for the edge device. The cloud server may then update the mapping between the device address and the IP address to reflect the updated IP address. The identity certificate assigned for the device address remains valid, even if the IP address of the edge device changes.

By allowing updates to the same device address whenever there is a change in the IP address of the edge device effectively solves the problems of domain/URL mismatching and dynamic IP addressing. By maintaining a unique device address for each edge device regardless of IP address changes, the present subject matter ensures that a domain name or an IP address that is entered in a URL of a web browser to access the edge device always matches the device address specified in the identity certificate CA server signed. This eliminates trust issues that arise from mismatches between domain name, or the IP address and the corresponding name mentioned in the identity certificate.

Accordingly, the solution provided by the present subject matter addresses the challenges posed by DHCP-assigned IP addresses, device reboots, or any other scenarios where the IP address of the edge device may change. When such changes occur, the edge device notifies the cloud server of its updated IP address, and the cloud server updates the mapping between the device unique URL and new IP address of the edge device. This ensures continuous accessibility to the edge device.

Therefore, the present subject matter ensures that the edge devices may be securely accessed regardless of network location of the edge devices or IP address changes. This eliminates the need for static IP assignments, resolves domain matching issues, and accommodates dynamic network environments. By automating certificate management and IP address updates, the present subject matter provides a seamless user experience for accessing and managing the edge devices across various network configurations.

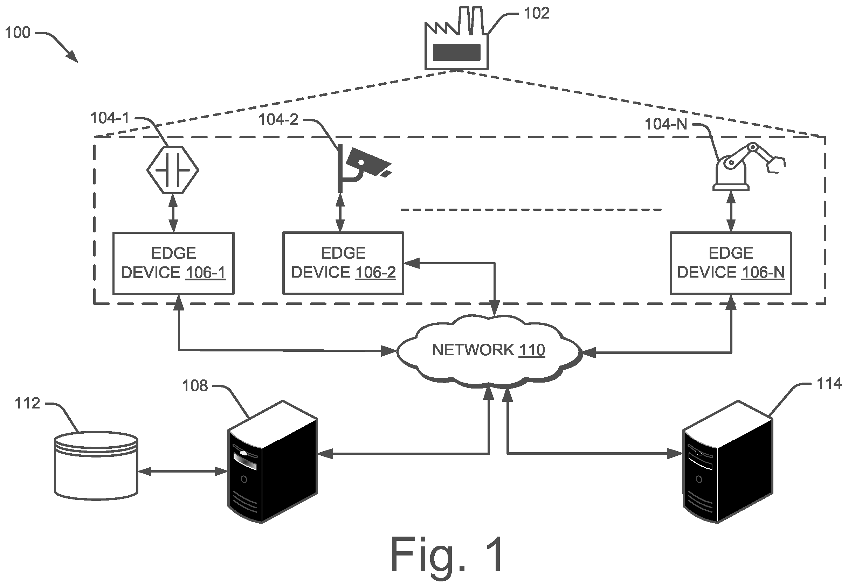

The above techniques are further described with reference to Fig. 1 to Fig. 9. It should be noted that the description and the Figures merely illustrate the principles of the present invention along with examples described herein and should not be construed as a limitation to the present invention. It is thus understood that various arrangements may be devised that, although not explicitly described or shown herein, embody the principles of the present invention. Moreover, all statements herein reciting principles, aspects, and implementations of the present invention, as well as specific examples thereof, are intended to encompass equivalents thereof.

Fig. 1 illustrates a network environment 100 for implementing examples techniques to manage access to edge devices, in accordance with an example implementation of the present subject matter.

Various operations may be carried out in a premises 102, such as industrial facilities, laboratories, commercial offices, malls, hotels, hospitals, residential complexes, educational institutions, and the like. These operations may involve controlling processes within the premises 102 or creating specific physical conditions to ensure safety, comfort, and productivity. Additionally, managing these operations often comes with a need for cost-efficient and sustainable management of resources. In some examples, beyond controlled indoor environments, operations requiring monitoring, automation, and optimization may also extend to open spaces such as traffic intersections, public transportation systems, agricultural fields, construction sites, and other outdoor settings. For example, in a manufacturing plant, operations may focus on optimizing energy consumption, reducing equipment downtime, and improving production efficiency. In a hospital, the emphasis may be on monitoring patient health, maintaining sterile environments, and ensuring the efficient operation of medical equipments. In urban traffic management, real-time monitoring and coordination of traffic signals may be necessary to improve traffic flow and reduce congestion. Similarly, in agriculture, operations may involve monitoring soil conditions and automating irrigation for improved crop yield. Thus, various environments require efficient management of operations to achieve specific goals, such as increased productivity, reduced operational costs, enhanced safety, and sustainability.

Carrying out such operations within an environment, such as the premises 102, may require the use of a plurality of equipments 104-1, 104-2, ... and 104-N. In an example, the equipments 104-1, 104-2, ... and 104-N may include devices such as security cameras, sensors, industrial machines, HVAC systems, lighting controls, or robots, depending on the nature of the premises 102. Each of these equipments 104-1, 104-2, ... and 104-N plays a predefined role in the operations of the premises 102. For example, security cameras may monitor sensitive areas to ensure safety, while temperature and pressure sensors may track environmental conditions to maintain product quality in a laboratory.

As the equipments 104-1, 104-2, ... and 104-N perform their respective functions, the equipments 104-1, 104-2, ... and 104-N may be configured to continuously generate data. In an example, the data generated by the equipments 104-1, 104-2, ... and 104-N installed in the premises 102 may include, but are not limited to, real-time readings, event logs, alerts, video feeds, or any other form of operational information. For example, a smart sensor installed on a piece of industrial machinery may collect data on vibration levels, temperature, and power consumption to help predict potential failures and schedule maintenance proactively. Similarly, in a smart retail store, people-counting sensors may track customer foot traffic patterns to optimize product placements and staffing decisions.

In an example, the data generated by the equipments 104-1, 104-2, ... and 104-N may be received by corresponding edge devices 106-1, 106-2, ... and 106-N. An edge device, such as the edge devices 106-1, 106-2, ... and 106-N, may be any type of equipment, instrument, or machine that has a capability to either receive data from a data source, such as a sensor, or generate data (e.g., machine-readable data) using a processor and to communicate that data to a cloud server. The edge device is generally deployed close to a data source to locally collect, process, and manage the data. By handling data at an edge, i.e., near the data source, the edge devices may reduce the need to send all raw data to a remote server or cloud server. In an example, the remote server may be implemented to run optimization processes, for example, by executing machine learning models, perform predictive analytics, or manage automated decision-making based on the data received from the edge devices 106-1, 106-2, ... and 106-N. Thus, the edge devices having processing capabilities, albeit limited, minimizes bandwidth usage, accelerates response times, and enables real-time decision-making. For example, in an industrial setting, an edge device connected to a temperature sensor on a production line may locally analyse sensor data to detect temperature anomalies and trigger an immediate alert, allowing operators to take corrective action without waiting for cloud-based processing. Similarly, in a smart building, an edge device connected to environmental sensors may autonomously control heating, ventilation, and air conditioning (HVAC) systems to maintain optimal indoor conditions, while only sending summarized reports or alerts to the cloud server. In another example, a surveillance camera may act as an edge device, analysing video footage locally to detect unusual activities, such as unauthorized access, and sending only relevant event data to the cloud server for further analysis or long-term storage. This localized processing not only reduces the volume of data transmitted to be transmitted to the cloud server but also enhances the responsiveness to critical events.

Given the critical role of the edge devices 106-1, 106-2, ... and 106-N in collecting and processing data in real time, there is often a need for users to access the edge devices 106-1, 106-2, ... and 106-N remotely or locally to monitor operations, retrieve data, and manage configurations. For example, in an industrial facility, an operator may need to access an edge device, such as an edge device 106-1, connected to a temperature sensor to analyse real-time environmental conditions. Similarly, in a smart city infrastructure, traffic management personnel may require access to edge devices embedded in traffic signals to optimize congestion control strategies. However, seamless and secure access to the edge devices 106-1, 106-2, ... and 106-N presents challenges. To enhance user experience, it is beneficial for users to access the edge devices 106-1, 106-2, ... and 106-N in a manner that ensures low-latency data retrieval and secure communication. Accessing the edge device 106-1 with minimal latency improves responsiveness, enabling real-time monitoring and decision-making. Additionally, when loT devices or embedded systems are authenticated from a public network, it is crucial to establish a trusted connection between a client system and the edge device 106-1. A key aspect of this is eliminating browser security warnings, such as "untrusted certificate" messages, which often arise when a self-signed or unrecognized certificate is used. Instead of requiring users to manually add individual edge device certificates to their trust store which is a cumbersome and error-prone process, a solution may be provided that allows for seamlessly managing trusted certificates, ensuring frictionless and secure edge device access.

Accordingly, in example implementations of the present subject matter, the network environment 100 may include a system 108, which may be implemented to manage access to the edge devices 106-1, 106-2, ... and 106-N. In an embodiment, the system 108 may be same as the above-described remote server or cloud server implemented to carry out optimization processes, to which the edge devices 106-1, 106-2, ... and 106-N are connected over a network, such as a network 110. In another embodiment, the system 108 may be a standalone server or a remote server on a cloud computing platform independent from the cloud server to which the edge devices 106-1, 106-2, ... and 106-N are connected to transmit the data collected by the edge devices 106-1, 106-2, ... and 106-N for processing independent of the optimization processes.

In an embodiment, the network 110 may be a single network or a combination of multiple networks and may use a variety of different communication protocols. The network 110 may be a wireless or a wired network, or a combination thereof. Examples of such individual networks include, but are not limited to, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NON), Public Switched Telephone Network (PSTN). Depending on the technology, the network 110 may include various network entities, such as gateways, and routers; however, such details have been omitted for the sake of brevity of the present description.

In an example, the system 108 may utilize a combination of secure authentication, dynamic address resolution, and certificate management mechanisms to enable seamless and secure access to the edge devices 106-1, 106-2, ... and 106-N, regardless of whether the user is within the same network as the edge devices 106-1, 106-2, ... and 106-N or accessing the edge devices 106-1, 106-2, ... and 106-N remotely. The system 108 may facilitate automatic mapping of device addresses of the edge devices 106-1, 106-2, ... and 106-N to updated IP addresses, certificate-based authentication, and intelligent routing of data requests, ensuring that users may reliably access the edge devices 106-1, 106-2, ... and 106-N without encountering security warnings or manual configurations. By implementing these techniques, the system 108 enhances operational efficiency, reduces latency in data access, strengthens security, and improves overall user experience when interacting with the edge devices 106-1, 106-2, ... and 106-N.

In an embodiment, an edge device, such as the edge device 106-1, that is to be accessed via the system 108, may be registered with the system 108. Hereinafter, the present disclosure is explained with reference to edge device 106-1, but it should be understood that the same principles and methods may apply to any edge device. In an example, to register the edge device 106-1 with the system 108, a request to register the edge device 106-1 may be sent to the system 108, for example, over the network 110. In an example, the request for registering the edge device 106-1 may include metadata associated with the edge device 106-1, such as a unique identifier of the edge device 106-1, an internet protocol (IP) address of the edge device 106-1, and other relevant attributes.

In an embodiment, upon receiving the registration request, the system 108 may extract the metadata and store the unique identifier of the edge device 106-1 in a database 112. In an example, based on the unique identifier, the system 108 may generate a device address corresponding to the edge device 106-1. In an example, the device address may be a unique resource locator (URL) created by the system 108, which serves as a unique reference for accessing embedded server of the edge device 106-1. For example, the device address of an edge device, such as the edge device 106-1, may be structured as: "abcde.sub.domain.tld", where "abcde" represents the unique identifier assigned to the edge device 106-1, "sub" represents a subdomain allocated to the edge device 106-1 within the system 108, and "domain.tld" represents registered domain of an organization implementing the system 108.

Further, in an embodiment, once the device address for the edge device 106-1 is generated by the system 108, the IP address of the edge device 106-1 may be mapped to the device address. By associating the access of the embedded server of the edge device 106-1 to the device address, the need for the users to remember or manually configure changes in the IP address of the edge device 106-1 is eliminated. Instead of relying on direct IP address based access, which may be unreliable due to dynamic IP changes, the users may simply access the edge device 106-1 using the assigned device address.

Further, in an embodiment, in an event that there is a change in the IP address of the edge device 106-1, the system 108 ensures continuous accessibility of the edge device 106-1 through the device address. For example, if the edge device 106-1 is assigned an IP address via a dynamic host configuration protocol (DHCP) server, a DHCP lease renewal may result in a refreshed IP address for the edge device 106-1. Similarly, scenarios such as a reboot of the edge device 106-1, relocation of the edge device 106-1 within the premises 102 may lead to a change in the IP address of the edge device 106-1. Upon detecting such a change, the edge device 106-1 may send a notification to the system 108 indicating the updated IP address. Based on this notification, the system 108 may remap the device address to the new IP address. Due to this dynamic update mechanism, even if the IP address of the edge device 106-1 changes, the device address remains valid, allowing seamless and uninterrupted access to the embedded server of the edge device 106-1. This eliminates the need for the users or applications to track or manually update the IP addresses of the edge device 106-1, thereby enhancing accessibility of the edge device 106-1.

Once the device address for the edge device 106-1 is generated, an identity certificate for the device address may be obtained to enable secure and authenticated access. In an embodiment, as part of the process to obtain the identity certificate for the device address, a notification from the edge device 106-1 requesting the generation of the identity certificate for the device address may be sent to the system 108. In an example, upon receiving the notification, the system 108 may generate a certificate signing request (CSR) and send the CSR to a certificate authority (CA) server 114 to issue the identity certificate for the device address. In an example, the CA server 114 may be a public CA server accessible over the network 110 by the system 108 or may be a private CA server hosted within the system 108 itself.

In an example, upon receiving the identity certificate from the CA server 114, the system 108 may update the edge device 106-1 with the identity certificate, enabling secure communication between the edge device 106-1 and external user devices. The identity certificate ensures that the edge device 106-1 is recognized as a trusted entity, preventing security warnings related to untrusted certificates. Additionally, in an embodiment, the identity certificate issued for the edge device 106-1 may also be stored in the database 112 of the system 108. This stored certificate may be used for authentication purposes, certificate renewal, or validation during device access requests.

Thus, by implementing this mechanism, the identity certificate of the edge device 106-1 is no longer considered untrusted by user devices or web browsers. As a result, the users do not encounter untrusted certificate warnings, do not need to manually install device certificates, and can seamlessly access the edge device 106-1 using secure, authenticated connections. This enhances security, usability, and compliance with encryption standards, ensuring a streamlined and trustworthy user experience.

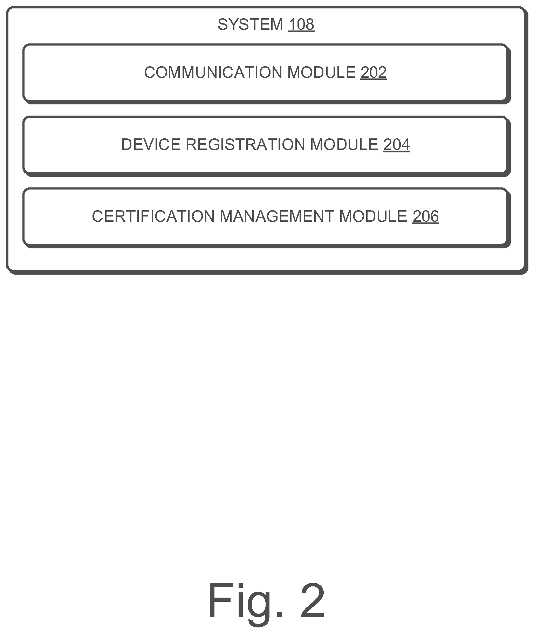

Fig. 2 illustrates a block diagram of the system 108, in accordance with an example implementation of the present subject matter.

In an example, the system 108 may an independent physical server, a server cluster, or a distributed system formed by a plurality of physical servers. In some embodiments, the system 108 may also be a cloud-based server that provides various cloud computing services to support edge device management, authentication, and secure communication. For example, when implemented as a cloud server, the system 108 may leverage cloud-based infrastructure and services, such as cloud databases, cloud computing, cloud storage, and cloud functions, to efficiently manage edge devices, such as the edge devices 106-1, 106-2, ... and 106-N. Additionally, the system 108 may utilize network services, cloud communication services, middleware, and security services to ensure seamless interaction between the edge devices and user devices. In some implementations, the system 108 may be integrates with a domain name service (DNS) for device address resolution, a content delivery network (CDN) for optimized access, and big data and Al platforms to analyze edge device data for predictive insights, security monitoring, or performance optimization.

As explained previously, in various network environments, such as the network environment 100, accessing the edge devices 106-1, 106-2, ... and 106-N is required for monitoring, control, and data retrieval. These edge devices 106-1, 106-2, ... and 106-N may be deployed across different locations, such as in the premises 102 or any other dynamic environments, where the edge devices 106-1, 106-2, ... and 106-N collect and transmit data to facilitate real-time decision-making, automation, and process optimization. Reliable access to the edge devices 106-1, 106-2, ... and 106-N ensures seamless operations and enhances the overall efficiency of procedures that the edge devices 106-1, 106-2, ... and 106-N support.

The system 108 is usable to provide for accessing the edge devices 106-1, 106-2, ... and 106-N, such that the access is uninterrupted and secure by dynamically managing device addresses, even when the IP addresses of the edge devices 106-1, 106-2, ... and 106-N change, for example, due to DHCP refresh cycles, edge device reboots, or relocations of the edge devices 106-1, 106-2, ... and 106-N. Additionally, the system 108 may automate identity certificate issuance and management, preventing security warnings and eliminating the need for users to manually install or trust individual identity certificates for the edge devices 106-1, 106-2, ... and 106-N. By implementing these mechanisms, the system 108 improves user experience through low-latency access to the edge device 106-1, 106-2, ... and 106-N, and ensures robust security for managing the edge devices 106-1, 106-2, ... and 106-N in a dynamic network environment.

In an embodiment, to implement the workflows for managing access to edge devices 106-1, 106-2, ... and 106-N, the system 108 includes a communication module 202. In an example, the communication module 202 may be configured to receive a request to register an edge device, such as the edge device 106-1. In an example, the request to register the edge device 106-1 may be received from the edge device 106-1, for example, when the edge device 106-1 is added with the network environment 100 for a first time. In an example, the registration request may include the metadata corresponding to the edge device 106-1. In an example, the metadata may include the unique identifier associated with the edge device 106-1 and the IP address of the edge device 106-1.

In an embodiment, the system 108 includes a device registration module 204. In an example, the device registration module 204 may generate, based on the unique identifier of the edge device 106-1, a device address for the edge device 106-1. In an example, the device address that is created by the device registration module 204 may allow access to the embedded server of the edge device 106-1. In an example, once the device address for the edge device 106-1 is created, the device registration module 204 may store the device address in the database 112 of the system 108. Further, the device registration module 204 may map the current IP address of the edge device 106-1 to the device address. Thus, by associating the IP address of the edge devoice 106-1 to the device address of the edge device 106-1, the system 108 reduces the complexity of managing dynamically changing IP addresses, and improves user accessibility. This eliminates the need for users to manually track IP changes, thereby enhancing network efficiency, reducing downtime, and improving overall user experience in accessing edge devices.

Further, in an embodiment, the system 108 includes a certification management module 206. In an example, the certification management module 206 may be configured to receive, from the edge device 106-1, a notification to generate an identity certificate for the device address. The notification may be sent by the edge device 106-1 when it is registered with the system 108 or upon renewal of an existing certificate.

In an example, upon receiving the notification, the certification management module 206 sends a request to the CA server 114 to issue the identity certificate for the device address. In an example, the CA server 114 may be a public CA or a private CA managed within the system 108. In an embodiment, upon receiving the identity certificate from the CA server 114, the certification management module 206 may update the edge device 106-1 with the identity certificate, which may be used for authentication purposes. The identity certificate may be stored in the database 112 of the system 108 to facilitate future authentication and certificate renewal processes.

Thus, by issuing the identity certificate for the device address through the CA server 114, the system 108 ensures that the identity certificate of the edge device 106-1 is no longer considered untrusted. This eliminates the need for users to manually add individual identity certificates, preventing the browser warnings related to untrusted certificates.

Further, by associating the identity certificate with the device address instead of the IP address, the system 108 ensures that even if the IP address of the edge device 106-1 changes, for example, due to DHCP refresh, device reboot, or relocation, the identity certificate remains valid. Since the device address remains unchanged within the system 108, the users may continue to access the edge device 106-1 without disruption. This enhances security, improves user experience, and simplifies certificate management in the network environments.

Furthermore, in an embodiment, whenever there is a change in the IP address of the edge device 106-1, for example, due to a DHCP refresh cycle, edge device 106-1 reboot, network reconfiguration, or relocation of the edge device 106-1 within the premises 102, the device registration module 204 may receive a notification from the edge device 106-1 regarding the updated IP address. In an example, upon receiving the updated IP address of the edge device 106-1, the device registration module 204 may update the mapping between the device address and the IP address. This ensures that the device address remains valid for accessing the edge device 106-1, even when the IP address of the edge device 106-1 changes dynamically.

By automatically updating the mapping between the device address and the IP address, the users do not need to manually track or reconfigure network settings to update the IP address of the edge device 106-1 whenever the IP address of the edge device 106-1 changes. This eliminates connectivity disruptions, reduces latency in accessing the edge device 106-1. Additionally, since the identity certificate is associated with the device address rather than the IP address, the certificate remains valid, ensuring continuous secure access to the edge device 106-1.

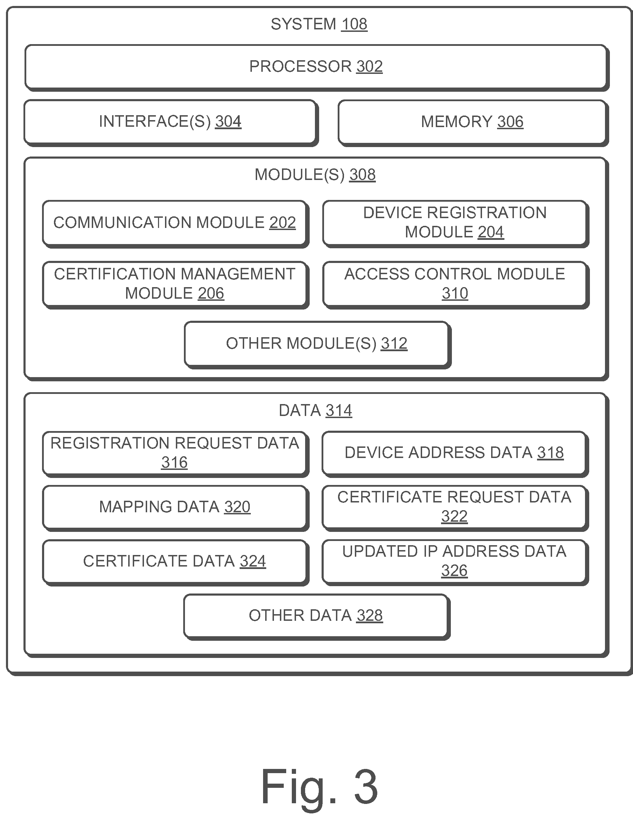

To elaborate on the functionality of the system 108 to manage access to the edge devices 106-1, 106-2, ... and 106-N, reference is made to Fig. 3.

Fig. 3 illustrates the system 108 that optimizes the process of accessing the edge devices 106-1, 106-2, ... and 106-N, in accordance with another example implementation of the present subject matter.

Example implementations of the system 108 depicted in Fig. 3 may include, but are not limited to, an application server, a database server, a mainframe server, a cloud server (e.g., a hybrid, private, or public cloud), or a web server. In an example, the system 108 may be implemented as server nodes of an on-premise server or a remotely hosted cloud server. In an example, the system 108 may be communicatively coupled to the edge devices 106-1, 106-2, ... and 106-N, for example, over the network 110, to enable interaction and management of the edge devices 106-1, 106-2, ... and 106-N.

In an embodiment, the system 108 may include a processor 302. In an example, the processor 302 may be implemented as microprocessors, microcomputers, microcontrollers, digital signal processors, central processing units, state machines, logic circuitries, and/or any devices that manipulate signals based on operational instructions.

In an embodiment, the system 108 may also include interface(s) 304. The interface(s) 304 may include a variety of software and hardware interfaces that allow interaction of the system 108 with other communication and computing devices, such as network entities, web servers, external repositories, and peripheral devices, such as input/output (I/O) devices. For example, the interface(s) 304 may couple the system 108 with the edge devices 106-1, 106-2,..., and 106-N, the CA server 114, and a user device (not illustrated) of a user who is authorized to access the edge devices 106-1, 106-2, ... and 106-N. In an example, the interface(s) 304 may also enable coupling of internal components, if any, of the system 108 with each other.

Further, in an embodiment, the system 108 may include a memory 306 coupled to the processor 302. The memory 306 may include any computer-readable medium known in the art including, for example, volatile memory (e.g., RAM), and/or non-volatile memory (e.g., EPROM, flash memory, etc.). The memory 306 may also be an external memory unit, such as a flash drive, a compact disk drive, an external hard disk drive, or the like. The system 108 may also include module(s) 308 and data 314 coupled to the processor 302. In one example, the module(s) 308 and data 314 may reside in the memory 306.

In an example, the data 314 may include registration request data 316, device address data 318, mapping data 320, certificate request data 322, certificate data 324, updated IP address data 326, and other data 328. In an example, the module(s) 308 may include routines, programs, objects, components, data structures, and the like, which perform particular tasks or implement particular abstract data types. The module(s) 308 further includes modules that supplement applications on the system 108, for example, modules of an operating system. The data 314 serves, amongst other things, as a repository for storing data that may be fetched, processed, received, or generated by one or more of the module(s) 308.

In an example, the module(s) 308 may include an access control module 310, and other module(s) 312 in addition to the previously mentioned communication module 202, device registration module 204, and certification management module 206,. The other module(s) 312 may include programs or coded instructions that supplement applications and functions, for example, programs in the operating system of the system 108.

In an embodiment, the communication module 202 may be configured to receive, for example, over the network 110, a request to register the edge device 106-1. In an example, the request may be raised from the edge device 106-1 when attempting to establish connectivity between the edge device 106-1 and the system 108 for the first time. The request may include metadata associated with the edge device 106-1.

In an example, the metadata may include the unique identifier of the edge device 106-1 and the IP address of the edge device 106-1. In an example, the unique identifier may be any identifier that is unique to the edge device 106-1, such as a serial number, a media access control (MAC) address, a universally unique identifier (UUID), an international mobile equipment identity (IMEI) number, or the like. For example, the MAC address of the edge device 106-1, which is a hardware-based identifier, may be used to uniquely distinguish the edge device 106-1 from others in the premises 102. In an example, the metadata may be utilized by the system 108 to validate the edge device 106-1, generate a corresponding device address, and facilitate communication between the edge device 106-1 and the system 108. In an example, the metadata received with the registration request may be stored in the data 314 as the registration request data 316 for further processing.

In an embodiment, once the request for the registration of the edge device is received, the device registration module 204 may generate, based on the unique identifier, the device address for the edge device 106-1. The device address is to provide access to the embedded server of the edge device 106-1. In an example, the device address may be a fully qualified domain name (FQDN) or a unique resource locator (URL) that, when accessed, may provide a means of communicating with the embedded sever of the edge device 106-1.

In an example, to generate the device address, the device registration module 204, upon receiving the request to register the edge device 106-1, may send a request to a domain name system (DNS) server for a subdomain address. In an example, the DNS server may be a network service that may be used to create and manage subdomains.

In an example, when the device registration module 204 receives a registration request for the edge device 106-1, the device registration module 204 may send a request to the DNS server for a subdomain address. Upon receiving the request, the DNS server may generate a subdomain address based on a predefined domain structure. In an example, the subdomain address may include a subdomain specific to the edge device 106-1 and a primary domain of the organization implementing the system 108. The subdomain address generated by the DNS server may follow a format "sub.domain.tld", where "sub" may represent a product specific subdomain assigned for accessing the edge device 106-1. In an example, the product specific subdomain may be dynamically generated or predefined based on deployment needs, while "domain.tld" may correspond to the primary domain, for example, "company.com". For example, if the edge device 106-1 is a surveillance camera, the product specific subdomain, i.e., "sub", may be "camera", resulting in the subdomain address as "camera.company.com". On the other hand, if the edge device 106-1 is an industrial sensor, the subdomain address may be "sensor.company.com". Further, in an example, the DNS server may generate the device address for the edge device 106-1 by combining the unique identifier of the edge device with the generated subdomain address. For example, if the edge device 106-1 is a surveillance camera and its unique identifier is "abc", the final device address assigned to the surveillance camera may be "abc.camera.company.com". In an example, data corresponding to the device address generated for the edge device 106-1 may be stored in the data 314 as the device address data 318.

Further, in an embodiment, records of the DNS server may be updated to map the newly created device address, for example, the "abc.camera.company.com", to the IP address of the edge device 106-1, which is received as part of the registration request. In doing so, an A (for IPv4) or AAAA (for IPv6) record for the device address of the edge device 106-1 may be updated by the device registration module 204 in the DNS server. In an example, the A/AAAA record associates the device address of the edge device 106-1 with the current IP address of the edge device 106-1, allowing user devices or applications to resolve the device address to the correct IP address when accessing the edge device 106-1. For example, if the device address of the edge device 106-1 is "abcde.sub.domain.tld", and the current IP address assigned to the edge device 106-1 is 192.168.1.10 (for IPv4), the device registration module 204 may update the record of the DNS server as follows: A record: abcde.sub.domain.tld-192.168.1.10, by way of concatenation of the device address and IP address of the edge device 106-1. In some examples, to map the device address of the edge device 106-1 with the current IP address of the edge device 106-1, the device registration module 204 may create a look-up table. In an example, data corresponding to the mapping of IP address with the device address may be stored in the data 314 as the mapping data 320.

Once the device address for the edge device 106-1 is created in the system 108, the identity certificate needed for secure communication and authentication may need to be obtained. In an embodiment, to initiate the process of obtaining the identity certificate, when the device address is created, the certification management module 206 may notify the edge device 106-1 to send a request for the generation of the identity certificate. In an example, the request may include a certificate signing request (CSR) to be processed by a certificate authority. Further, data corresponding to the request received from the edge device 106-1 for obtaining the identity certificate for the device address may be stored in data 314 as the certificate request data 322.

In an embodiment, in response to the notification, the certification management module 206 may proceed to obtain the identity certificate for the edge device 106-1 corresponding to the device address from the CA server 114 which acts as the certificate authority. In an example, to obtain the identity certificate, the certification management module 206 send a request to the CA server 114 to issue the identity certificate for the device address of the edge device 106-1.

In an embodiment, the CA server 114 may be a public CA server accessible by the system 108 over the network 110. In an alternative embodiment, the CA server 114 may be a private CA server hosted within infrastructure of the organization, such as an on-premises certificate authority or an enterprise-managed CA, to issue identity certificates for edge devices within a controlled network environment. Additionally, the CA server 114 may be implemented as a hybrid CA, where the system 108 may dynamically select between a public or private CA server based on predefined security policies, edge device type, or deployment requirements.

In an example, when the CA server 114 is a public CA, it may be a third-party service provider, such as Let's Encrypt, DigiCert, or GlobalSign, that issues identity certificates based on domain validation (DV), organization validation (OV), or extended validation (EV) processes. The system 108 may interact with such public CA servers over standard protocols such as automated certificate management environment (ACME) or Public Key Infrastructure (PKI) based request-response mechanisms to obtain the identity certificate for the device address of the edge device 106-1. Alternatively, when the CA server 114 is a private CA, the CA server 114 may be managed internally within the premises 102, issuing identity certificates based on policies defined by the organization implementing the system 108. In an example, a private CA server may be used in environments requiring customized certificate issuance policies, enhanced security controls, or integration with an enterprise-level PKI.

In an example, in response to the request, the certification management module 206 receives a DNS challenge from the CA server 114 for the device address. In an example, the DNS challenge may be to validate ownership of the device address. In an example, the DNS challenge may follow the ACME protocol, wherein the certification management module 206 may be required to complete the DNS challenge by hosting a response to the DNS challenge on the DNS server.

In an example, hosting the response to the DNS server may include creating and storing a DNS record of the DNS challenge in the DNS server, which may contain a specific token provided by the CA server 114. This may allow the CA server 114 to verify that the entity requesting the identity certificate, i.e., the system 108, has control over the IP address, domain, or subdomain associated with the device address. In an example, once the DNS challenge is created, the certification management module 206 may notify the CA server 114 regarding the creation of the DNS challenge on the DNS server. Based on this notification, the CA server 114 may proceed to validate the completion of the DNS challenge. For example, the CA server 114 may query the DNS server to check for the presence of the expected DNS record containing the challenge response token. If the correct DNS record is found, the CA server 114 considers the challenge successfully completed and verifies that the system 108 has legitimate control over the device address.

In an example, once the DNS challenge is validated, the CA server 114 may generate and issue the identity certificate for the device address of the edge device 106-1 and send the identity to the certification management module 206 for further processing. In an example, after receiving the identity certificate, the certification management module 206 may send the identity certificate to the edge device 106-1 to store and use the identity certificate for any authentication purpose. Also, in an example, the certification management module 206 stores a copy of the identity certificate in the data 314 as the certificate data 324. Thus, when a user accesses the edge device 106-1 through the device address e.g., abc.camera.company.com, of the edge device 106-1, the DNS server resolves the access request by directing the user to the IP address of the edge device associated with the device address. Since the identity certificate, issued by the trusted CA, is associated with the device address, the browser or application through which the user is accessing the edge device 106-1 verifies the IP address during HTTPS handshake. Because the identity certificate is valid and matches the device address, the connection is recognized as secure, preventing browser warnings like "untrusted certificate" or "connection not secure." This ensures seamless and trusted access to the edge device 106-1 without security concerns.

Accordingly, embedded devices, such as high resolution video security cameras, Voice over Internet Protocol phones, or the like, which are typically used to handle high bandwidth and high resolution streaming data may not face annoying warning about trusting a device identity certificate from client browsers citing authentication issues.

The identity certificate issued for the device address may remain valid for a predefined period of time, after which it must be renewed before its expiration to ensure continued secure authentication and communication. In an embodiment, to renew the identity certificate, the certification management module 206 may initiate the renewal process before the expiry of the predefined validity period of the identity certificate. In an example, the certification management module 206 may send a request to the CA server 114 to renew the identity certificate associated with the device address. The renewal process may follow the same steps as the initial generation of the identity certificate, including the DNS challenge aspect for validation. In that, upon receiving the renewal request, the CA server 114 may issue a DNS challenge to verify continued control over the device address. The certification management module 206 may then host the response to the DNS challenge in the DNS server by creating or updating a DNS record containing a specific validation token provided by the CA server 114. Once the CA server 114 verifies the DNS challenge, the CA server 114 may generate and issue the renewed identity certificate for the device address. In an example, upon receiving the renewed identity certificate from the CA server 114, the certification management module 206 may update the database 112 with the renewed identity certificate and send the renewed identity certificate to the edge device 106-1 for storage and use. This ensures that the edge device 106-1 maintains a valid identity certificate, preventing authentication issues and enabling secure, uninterrupted access.

The identity certificate assigned to the device address may require re-registration in certain scenarios, such as when the edge device 106-1 undergoes a factory reset, is replaced, or loses its existing identity certificate due to malfunctions, such as a virus or other intrusion affecting the premises 102 or edge device 106-1. In such cases, the certification management module 206 may facilitate the re-registration process to ensure that the edge device 106-1 may regain a valid identity certificate for secure authentication and communication. In an embodiment, to re-register the identity certificate, the edge device 106-1 may initiate a request for re-registration with the certification management module 206. Upon receiving the request, the certification management module 206 may send the request to the CA server 114 to issue a new identity certificate for the device address. The re-registration process follows the same steps as the initial certificate generation, including the DNS challenge and its subsequent verification. Thus, upon receiving the request, the CA server 114 may yet again issue another DNS challenge to confirm that the system 108 continues to have control over the device address. The certification management module 206 may then update or create a DNS record in the DNS server containing the challenge response using a unique token provided by the CA server 114. In an example, once the CA server 114 validates the DNS challenge, the CA server 114 may generate and issue a new identity certificate for the device address. Upon receiving the newly issued identity certificate, the certification management module 206 updates the database 112 with the re-registered identity certificate and sends the newly registered identity certificate to the edge device 106-1 for storage and use. This ensures that the edge device 106-1 continues to be authenticated securely without any trust or security issues when accessed via the device address.

As explained previously, the IP address of the edge device 106-1 may change, for example, due to network reconfiguration, DHCP lease renewal, or device relocation within the premises 102. To ensure that such changes do not cause disruptions in accessing the edge device 106-1, the present subject matter provides a mechanism for automatically updating the IP address of the edge device 106-1 whenever a change occurs.

In an embodiment, to achieve this, the device registration module 204 may receive a notification from the edge device 106-1 indicating an update in the IP address whenever the edge device 106-1 is assigned an IP address different from the previously registered IP address in the system 108. The notification may include the updated IP address of the edge device 106-1. Data corresponding to the updated IP address received from the edge device 106-1 may be stored in the data 314 as the updated IP address data 326. Upon receiving the notification, the device registration module 204 may retrieve the device address associated with the edge device 106-1 from the database 112 of the system 108. Subsequently, the device registration module 204 may update the mapping between the device address and the updated IP address in the database 112 of the system 108 based on the updated IP address data. For example, if the original mapping is: "abcde.sub.domain.tld-192.168.1.10" and the edge device 106-1 is assigned a new IP address 192.168.1.20, the device registration module 204 may update the DNS record as "abcde.sub.domain.tld-192.168.1.20". Since the identity certificate is associated with the device address rather than the IP address, this ensures that the identity certificate remains valid even after the IP address change.

In an example, once the mapping is updated, the device registration module 204 may send a confirmation message to the edge device 106-1, acknowledging the updated IP address. This process enables seamless and uninterrupted access to the edge device 106-1, ensuring that changes in its IP address do not affect its accessibility or authentication.

In an embodiment, the access control module 310 may be configured to control access to the edge device 106-1 based on a determination of a location of a user device (not illustrated in Fig. 3) associated with the user authorized to access the edge device 106-1. In operation, upon receiving a request from the user device to access data from the edge device 106-1, the access control module 310 may determine whether the user device and the edge device 106-1 are within a same network, such as a local area network implemented within the premises 102. If the access control module 310 determines that the user device and the edge device 106-1 are in the same network, the access control module 310 may redirect the user device to the device address of the edge device 106-1.

In an example, when the user device attempts to access the device address, e.g., abc.camera.company.com, the DNS server resolves the device address to the corresponding IP address of the edge device 106-1. Further, when accessing the edge device 106-1, the identity certificate is used to authenticate the edge device 106-1 on a web browser or applications of the user device, preventing unauthorized access and eliminating security warnings in the web browsers or applications. This ensures that the data being retrieved from the edge device 106-1 is both secure and trusted. This allows the user device to establish a direct connection with the edge device 106-1 for efficient data access. Furthermore, the identity certificate associated with the device address ensures secure communication between the user device and the edge device 106-1.

On the other hand, if the access control module 310 determines that the user device is on a different network, such that the user device is accessing the edge device 106-1 remotely via the network 110, the access control module 310 may retrieve the device address associated with the edge device 106-1, wherein the device address is mapped to the current IP address of the edge device 106-1. Further, the access control module 310 may verify the identity certificate associated with the device address to ensure secure and authenticated access. Upon successful verification of the identity certificate, the access control module 310 may request access to the data from the edge device 106-1 using the device address. The edge device 106-1 may respond with the requested data over the network 110. Once the access control module 310 receives the requested data from the edge device 106-1, the access control module 310 may establish a connection with the user device and relay the received data to the user device over the network 110.

Thus, even if the user device is not connected to the same network as the edge device 106-1, the system 108 ensures secure remote access. By utilizing the identity certificate associated with the device address, the communication remains encrypted and trusted, preventing security warnings or authentication issues when accessing the data. This enables seamless and secure remote access to edge device data while maintaining data integrity and security.

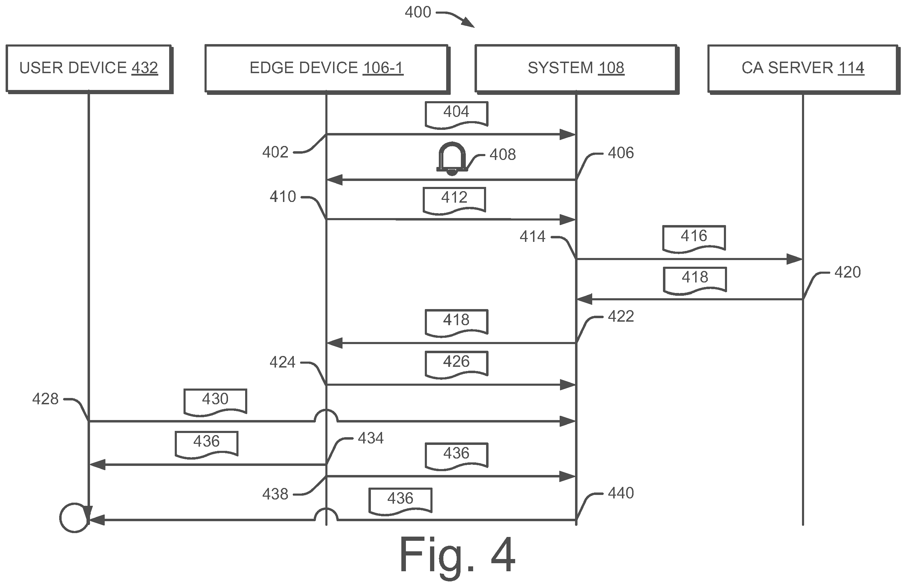

In an example implementation of the present subject matter, Fig. 4 illustrates a signal flow 400 in a process to manage access to the edge device 106-1, according to an example implementation of the present subject matter.

As described with reference to Figs. 1-3, the edge device 106-1 is accessed for various operational and management purposes, including, but not limited to, monitoring health of the edge device 106-1, configuring settings of the edge device 106-1, managing firmware updates, and ensuring continuous functionality of applications and systems that rely on the edge device 106-1. Additionally, the edge device 106-1 may play a role in real-time data processing, where immediate access to data is necessary for making decisions, for example, in industrial automation, smart surveillance, loT deployments, and other use cases.

However, as discussed previously, accessing the edge device 106-1 may present several challenges, such as dynamic IP address changes, security concerns related to authentication and encrypted communication, and ensuring continuous access to the edge device 106-1 without disruptions. The present subject matter provides mechanisms to overcome these challenges by implementing a structured and secure approach for accessing the edge device 106-1.

As per an example implementation of the present subject matter, in a process to manage the access of the edge device 106-1, as indicated by step 402, a request 404 to register the edge device 106-1 may be received, for example, over the network 110, at the communication module 202 of the system 108. As explained previously, the request 404 to register the edge device 106-1 with the system 108 may be received from the edge device 106-1 at a time when the edge device 106-1 is first commissioned. In an embodiment, the request 404 may include the unique identifier and the IP address of the edge device 106-1 and may be sent to the device registration module 204 of the system 108. Upon receiving the request 404, the device registration module 204 may initiate the process of generating the device address for the edge device 106-1. In an example, this may involve requesting a subdomain address from the DNS server, which may be implemented as a service within the system 108 or accessed as an independent service over the network 110. Once the DNS server provides a subdomain address, the device registration module 204 may generate the complete device address by combining the subdomain with the unique identifier of the edge device 106-1. Further, the device registration module 204 may map the IP address of the edge device 106-1 to the device address of the edge device 106-1.

Based on the device address, the system 108 may initiate the process of obtaining the identity certificate corresponding to the device address of the edge device 106-1. In doing so, in an embodiment, the device registration module 204 may actuate the certification management module 206 of the system 108. Further, in an embodiment, as shown in step 406, the certification management module 206 of the system 108 may send a notification 408 to the edge device 106-1, instructing the edge device 106-1 to provide a request for the identity certificate.

In an embodiment, as shown in step 410, upon receiving the notification 408, the edge device 106-1 may generate and send a request to the system 108 instructing the system 108 to initiate the process of obtaining the identity certificate. In an example, this request may be in the form of a certificate signing request (CSR) 412.

In an example, the system 108, upon receiving the CSR 412, may verify authenticity of the CSR 412 and ensure that the CSR 412 corresponds to the assigned device address.

Further, in an embodiment, as shown in step 414, upon successful validation of the CSR 412, the system 108 may send a request 416 to the CA server 114 to issue the identity certificate for the device address. As explained previously, the CA server 114, which acts as a trusted certificate authority, may validate the request 416, perform any necessary ownership verification (such as a DNS challenge), and then may generate an identity certificate 418.

In an embodiment, as shown in step 420, once the identity certificate 418 is issued, the CA server 114 may send the identity certificate 418 to the system 108 for further processing. In an example, the system 108 may then store a copy of the identity certificate 418 in the database 112 of the system 108. Also, in an embodiment, as shown in step 422, the system 108 may transmit a copy of the identity certificate 418 to the edge device 106-1 for secure storage and use in authentication and encrypted communication.

Accordingly, issuing the identity certificate 418 to the device address ensures that the edge device 106-1 is authenticated by a trusted CA, thereby eliminating the issue of untrusted certificates. Traditionally, self-signed or locally issued certificates on loT and embedded devices trigger security warnings in browsers and applications, as they are not linked to a globally recognized CA. However, in the present subject matter, the identity certificate is issued by the CA server 114, which is recognized by standard browsers and security protocols. Since the identity certificate is associated with the device address rather than a changing IP address, any request made to access the edge device 106-1 using the device address may be resolved to the correct IP, and the corresponding identity certificate may be validated against trusted chain of the CA server 114. As a result, client browsers and applications may trust the identity certificate without displaying security warnings, ensuring uninterrupted and secure communication with the edge device 106-1.

Further, in an embodiment, as shown in step 424, in case of a change in the IP address of the edge device 106-1, an IP address update request 426 may be sent to the system 108 from the edge device 106-1. In an example, the system 108 may update the mapping between the device address and the updated IP address in the DNS server records while maintaining the association of the identity certificate with the edge device 106-1 unaltered. This ensures that the edge device 106-1 remains accessible via its device address, even if the IP address of the edge device 106-1 changes, for example, due to network reconfiguration, DHCP lease renewal, or relocation within the premises 102. As a result, the identity certificate remains valid and trusted, allowing secure communication between user devices and the edge device without requiring certificate reissuance.

Further, in an embodiment, as shown in step 428, whenever a user is to access data from the edge device 106-1, an access request 430 may be sent from a user device 432 of the user to the system 108. In an example, upon receiving the access request 430, the system 108 may determine if the user device 432 and the edge device 106-1 are in a same network, such as the local area network implemented within the premises 102. As explained previously, if it is determined that the user device 432 and the edge device 106-1 are in the same network, the system 108 may redirect the user device 432 to the device address of the edge device 106-1. In doing so, the system 108 may resolve the device address to the corresponding IP address of the edge device 106-1 by querying the DNS server. Upon resolution, the device address is replaced with the resolved IP address of the edge device 106-1, enabling direct communication between the user device 432 and the edge device 106-1. Since the edge device 106-1 has already been issued an appropriate identity certificate, such as the identity certificate 418, the data retrieved from the edge device 106-1 may be trusted by the browser or application on the user device 432 without any HTTPS errors or security warnings. The identity certificate 418, issued by the trusted CA, ensures secure, encrypted communication between the user device 432 and the edge device 106-1, preventing man-in-the-middle attacks and maintaining data integrity. As shown in step 434, this allows the data 436 from the edge device 106-1 to be transmitted directly to the user device 432 without additional security exceptions or warnings.

Furthermore, in an embodiment, if the system 108 determines that the user device 432 and the edge device 106-1 are in different networks, for example, when the user device 432 is accessing the edge device 10601 remotely through the network 110, the access control module 310 may facilitate access to the data from the edge device 106-1 on the user device 432 by acting as an intermediary between the user device 432 and the edge device 106-1.

For the purpose, as explained previously, the system 108 may retrieve the device address associated with the edge device 106-1 from the database 112. Since the device address is mapped to the current IP address of the edge device 106-1, the access control module 310 ensures that the correct and up-to-date IP address is used for communication. Further, the system 108 may verify the identity certificate associated with the device address before initiating data transmission. Once verification is complete, the system 108 may establish a communication channel with the edge device 106-1 using the device address. As shown in step 438, the system 108 may then receive the requested data 436 from the edge device 106-1 on behalf of the user device 432. As shown in step 440, upon receiving the requested data 436 from the edge device 106-1, for example, over the network 110, the system 108 may relay the received data to the user device 432, for example, over the internet.

This ensures that even when the user device 432 and the edge device 106-1 are in different networks, the identity certificate of the edge device 106-1 may facilitate secure, encrypted communication. This prevents unauthorized access, mitigates security risks, and ensures that the data received by the user device 432 is trusted and free from the HTTPS errors or security warnings.

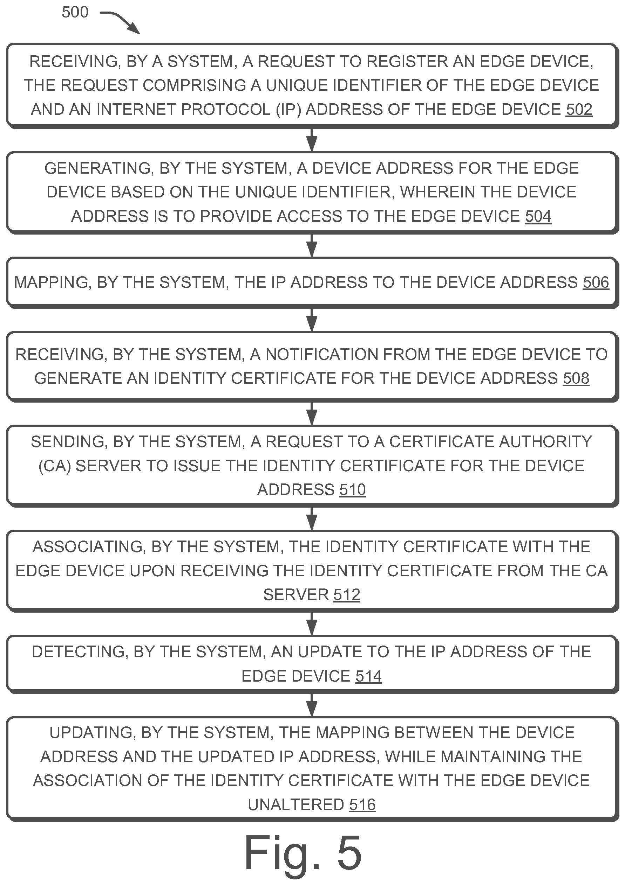

Fig. 5 illustrates a method 500 for managing access to edge devices, such as the edge device 106-1, according to an example implementation of the present subject matter. Although the method 500 may be implemented in a variety of computer-based systems, for the ease of explanation, the present description of the example method 500 to manage the access to the edge device 106-1 is provided in reference to the above-described system 108.

It may be understood that blocks of the method 500 may be implemented by a processor(s) or computing device(s) through any suitable hardware, non-transitory machine-readable instructions, or a combination thereof. It may be understood that blocks of the method 500 may be performed by programmed computing devices, such as the system 108, which may operate as a cloud server. The blocks of the method 600 may be executed based on instructions stored in a non-transitory computer-readable medium, as will be readily understood. The non-transitory computer-readable medium may include, for example, digital memories, magnetic storage media such as magnetic disks and magnetic tapes, hard drives, or optically readable digital data storage media.

The order in which the method 500 is described is not intended to be construed as a limitation, and any number of the described method blocks may be combined in any order to implement the method 500, or an alternative method. Furthermore, the method 500 may be implemented by processor(s) or computing device(s) through any suitable hardware, non-transitory machine readable instructions, or combination thereof.

Referring to Fig. 5, at block 502, the method 500 may include receiving a request to register the edge device 106-1 that seeks to connect to the network 110. In an example, the request may be sent by the edge device 106-1 to the system 108. As explained previously, the request may include a unique identifier of the edge device and an internet protocol (IP) address of the edge device 106-1. In an example, the unique identifier may be a distinctive value, that uniquely identifies the edge device 106-1 from other devices connected within the network 110. The IP address, on the other hand, may be understood as an address assigned to the edge device 106-1, enabling the edge device 106-1 to communicate over the network 110. The IP address allows the edge device 106-1 to send and receive data packets and establishes the fundamental connection point for interactions within the network environment 100.

At block 504, the method 500 may include, upon receiving the registration request, generating a device address for the edge device 106-1 based on the unique identifier. In an example, to generate the device address for the edge device 106-1, the system 108 may be used. The device address assigned serves as a stable and consistent means of accessing the edge device 106-1 within the network 110.

At block 506, the method 500 may include mapping the IP address of the edge device 106-1 to the device address. In an example, to perform this mapping, the system 108 uses the IP address received in the registration request and associates the IP address with the device address that is generated in the block 504. The IP address, being the address assigned to the edge device 106-1 for communication over the network 110, is now mapped to the device address, which remains persistent in the system 108 and facilitates consistent identification of the edge device 106-1 across various network services.

At block 508, the method 500 may include receiving a notification from the edge device 106-1 to generate an identity certificate for the device address. In an example, after successfully mapping the IP address to the device address, the system 108 waits for the notification from the edge device 106-1, signaling that the edge device 106-1 is ready for the next step in the registration process. This notification is sent by the edge device 106-1 to the system 108, indicating that the edge device 106-1 is requesting the creation of the identity certificate for the device address. In an example, the system 108 may process this request to obtain the identity certificate.

At block 510, the method 500 may include sending a request to a certificate authority (CA) server, such as the CA server 114, to issue the identity certificate for the device address. In an example, the system 108 sends the request to the CA server after the notification has been received from the edge device 106-1. As explained previously, the CA server 114 may process this request, perform necessary validation checks, and issue the identity certificate, which is a trusted cryptographic credential that authenticates the edge device 106-1. The CA server 114 ensures that the identity certificate is issued in accordance with security protocols, thereby enabling the edge device 106-1 to participate securely in network communications.

At block 512, the method 500 may include associating the identity certificate with the edge device 106-1 upon receiving the identity certificate from the CA server 114. In an example, after the system 108 has sent the request to the CA server and the identity certificate is issued, the system 108 receives the identity certificate from the CA server 114. In an example, the system 108 may then associate the identity certificate with the corresponding device address of the edge device 106-1. This association ensures that the identity of the edge device 106-1 is securely tied to the device address of the edge device 106-1 within the network 110, allowing the edge device 106-1 to use the identity certificate for authentication and encrypted communication. The identity certificate is stored within the device registry and in the database 112 managed by the system 108. Once the identity certificate is successfully associated, the edge device 106-1 may participate in secure communications across the network 110, ensuring that the identity of the edge device 106-1 is verified by other devices and services that rely on the identity certificate for trust verification.

At block 514, the method 500 may include detecting an update to the IP address of the edge device 106-1. In an example, the system 108 continuously monitors the network 110 for changes or updates to the IP address assigned to the edge device 106-1. As explained previously, an update to the IP address of the edge device 106-1 may occur due to various reasons, such as network reconfiguration, device mobility, or DHCP refresh. In an example, the system 108 may detects the change in the IP address and trigger the necessary steps to ensure that the IP address of the edge device 106-1 remains correctly mapped with the device address of the edge device 106-1 within the system 108.

At block 516, the method 500 may include updating the mapping between the device address and the updated IP address while maintaining the association of the identity certificate with the edge device 106-1 unaltered. In an example, upon detecting the change in the IP address of the edge device 106-1, the system 108 may request from the edge device 106-1, the updated IP address assigned to the edge device 106-1. In an example, after receiving the updated IP address of the edge device 106-1, the system 108 may update the mapping between the device address and the IP address of the edge device 106-1 to reflect the new IP address. This ensures that the system 108 may correctly route data and communication to the edge device 106-1 using the new IP address. Since there is no change in the device address, the identity certificate previously associated with the device address, remains valid. The identity certificate continues to validate the identity of the edge device 106-1, ensuring that security and authentication properties of the edge device 106-1 are preserved even after the IP address update.

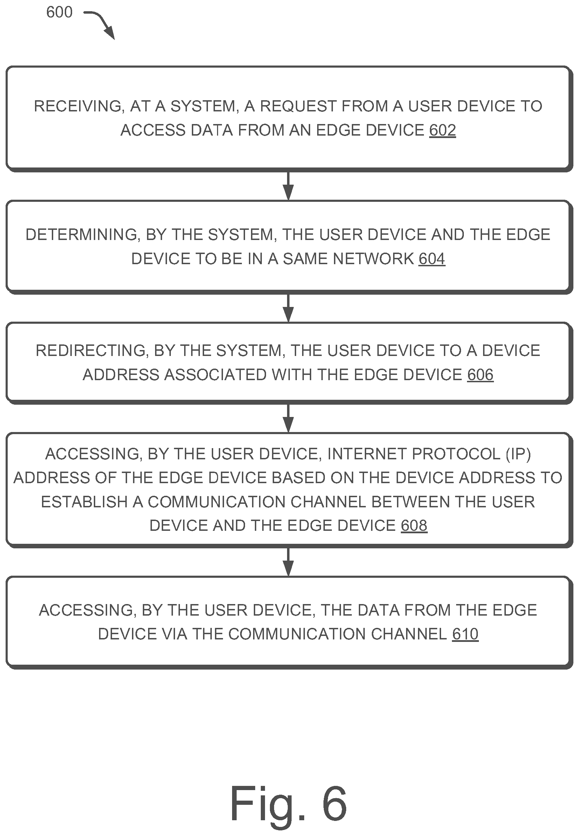

Fig. 6 illustrates a method 600 for accessing the data from the edge device 106-1 by a user device, such as the user device 432, when the edge device 106-1 and the user device 432 are in a same network, such as the local area network implemented within the premises 102, according to an example implementation of the present subject matter. Although, the method 600 may be implemented in a variety of computer-based systems such as the system 108, as is the case with method 500, for the ease of explanation, the present description of the example method 600 to access the data from the edge device 106-1 is provided in reference to the above-described system 108.

Similar to the method 500, the method 600 may be implemented by a processor(s) or computing device(s) through any suitable hardware, non-transitory machine-readable instructions, or a combination thereof. It may be understood that blocks of the method 600 may be performed by programmed computing devices, such as the system 108, which may operate as a cloud server. The blocks of the method 600 may be executed based on instructions stored in a non-transitory computer-readable medium, as will be readily understood. The non-transitory computer-readable medium may include, for example, digital memories, magnetic storage media such as magnetic disks and magnetic tapes, hard drives, or optically readable digital data storage media.

The order in which the method 600 is described is not intended to be construed as a limitation, and any number of the described method blocks may be combined in any order to implement the method 600, or an alternative method.

Referring to Fig. 6, at block 602, the method 600 may include receiving a request from the user device 432 to access the data from the edge device 106-1. In an example, the request may be sent by the user device 432 to the system 108, for example, by entering the IP address of the edge device 106-1 in a web browser of the user device 432. In an example, the system 108 may process the request to identify an appropriate edge device, such as the edge device 106-1, that corresponds to the request.

At block 604, the method 600 may include determining that the user device 432 and the edge device 106-1 are in the same network. In an example, to determine if the edge device 106-1 and the user device 432 are in the same network, the system 108 may compare network identifiers, such as subnet information or private IP ranges, of both the user device 432 and the edge device 106-1. If the system 108 identifies that the network identifiers match, the system 108 may determines that both devices are in the same network.

At block 606, the method 600 may include redirecting the user device 432 to the device address associated with the edge device 106-1. In an example, after determining that the user device 432 and the edge device 106-1 are in the same network, the system 108 may direct the user device 104-1 to the device address of the edge device 106-1. As explained previously, the device address acts as a unique identifier for the edge device 106-1 within the network, ensuring that the user device 432 may communicate with the edge device 106-1 to retrieve the requested data.

At block 608, the method 600 may include accessing the internet protocol (IP) address of the edge device 106-1 based on the device address to establish a communication channel between the user device 432 and the edge device 106-1. In an example, the user device 432 may communicate with the system 108 to access the IP address corresponding to the device address of the edge device 106-1. In an example, using the IP address, the user device 432 may establish a direct communication channel with the edge device 106-1.

At block 610, the method 600 may include accessing, by the user device 432, the data from the edge device 106-1 via the communication channel. In an example, after successfully establishing the communication channel, the user device 432 may send a data access request to the edge device 106-1 over the IP-based communication channel. The edge device 106-1 may process the request and send the requested data back to the user device 432. Since the edge device 106-1 possesses a valid identity certificate associated with the device address of the edge device 106-1, the data transmission occurs over a trusted and encrypted HTTPS connection. This ensures that no identity certificate-related security warnings or errors appear on the user device 432 when accessing the data from the edge device 106-1.

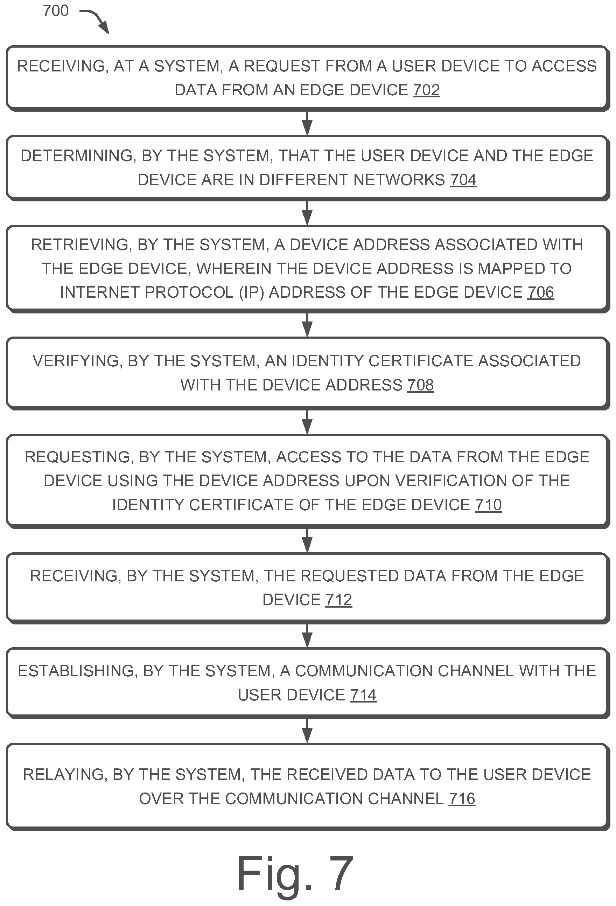

Fig. 7 illustrates a method 700 for accessing the data from the edge device 106-1 by the user device 432, when the edge device 106-1 and the user device 432 are in different networks, according to an example implementation of the present subject matter. Although, the method 700 may be implemented in a variety of computer-based systems such as the system 108, as is the case with method 500 and method 600, for the ease of explanation, the present description of the example method 700 to access the data from the edge device 106-1 is provided in reference to the above-described system 108.

Similar to the method 500 and method 600, the method 700 may be implemented by a processor(s) or computing device(s) through any suitable hardware, non-transitory machine-readable instructions, or a combination thereof. It may be understood that blocks of the method 700 may be performed by programmed computing devices, such as the system 108, which may operate as a cloud server. The blocks of the method 700 may be executed based on instructions stored in a non-transitory computer-readable medium, as will be readily understood. The non-transitory computer-readable medium may include, for example, digital memories, magnetic storage media such as magnetic disks and magnetic tapes, hard drives, or optically readable digital data storage media.

The order in which the method 700 is described is not intended to be construed as a limitation, and any number of the described method blocks may be combined in any order to implement the method 700, or an alternative method.

Referring to Fig. 7, at block 702, the method 700 may include receiving a request from the user device 432 to access the data from the edge device 106-1. As explained previously, the request may be received from the user device 432 at the system 108.

At block 704, the method 700 may include determining that the user device 432 and the edge device 106-1 are in different networks. As explained previously, this determination may be made by the system 108 after receiving the request from the user device 432 to access the data from the edge device 106-1.

At block 706, the method 700 may include retrieving the device address associated with the edge device 106-1. As explained previously, the device address may be mapped to the IP address of the edge device 106-1 and may be accessed by the system 108 from the database of the system 108.

At block 708, the method 700 may include verifying the identity certificate associated with the device address. In an example, to verify the identity certificate associated with the device address, the system 108 may retrieve the identity certificate the database 112 within the system 108.

At block 710, the method 700 may include requesting access to the data from the edge device 106-1 using the device address upon verification of the identity certificate of the edge device 106-1. As explained previously, the system 108 may issue the request to access the data from the edge device 106-1.

At block 712, the method 700 may include receiving the requested data from the edge device 106-1. As explained previously, the system 108 may receive the requested data from the edge device 106-1, for example, over the network 110.

At block 714, the method 700 may include establishing a communication channel with the user device 432. In an example, the system 108 may establish this communication channel, for example, by initiating a secure handshake protocol between the user device 432 and system 108 over the network 110.

At block 716, the method 700 may include relaying the received data to the user device 432 over the communication channel. In an example, the system 108, acting as the intermediary between the edge device 106-1 and the user device 432, may facilitate the data transmission, thereby allowing protected and authenticated access to the requested information. Accordingly, even when the user device 432 and the edge device 106-1 are on the different networks, the data transmission between the edge device 106-1 and the user device 432 may occur securely using identity certificates.

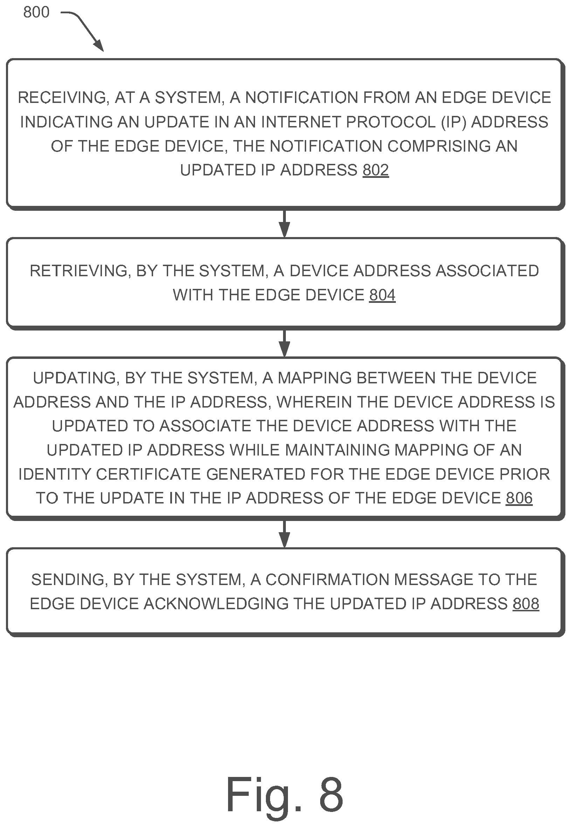

Fig. 8 illustrates a method 800 for updating the mapping between the device address and the IP address the edge device 106-1 whenever there is a change in the IP address of the edge device 106-1, according to an example implementation of the present subject matter. Although, the method 800 may be implemented in a variety of computer-based systems such as the system 108, as is the case with method 500, 600, and 700, for the ease of explanation, the present description of the example method 800 to update the IP address is provided in reference to the above-described system 108.

Similar to the method 500, 600, and 700, the method 800 may be implemented by a processor(s) or computing device(s) through any suitable hardware, non-transitory machine-readable instructions, or a combination thereof. It may be understood that blocks of the method 800 may be performed by programmed computing devices, such as the system 108, which may operate as a cloud server. The blocks of the method 800 may be executed based on instructions stored in a non-transitory computer-readable medium, as will be readily understood. The non-transitory computer-readable medium may include, for example, digital memories, magnetic storage media such as magnetic disks and magnetic tapes, hard drives, or optically readable digital data storage media.

The order in which the method 800 is described is not intended to be construed as a limitation, and any number of the described method blocks may be combined in any order to implement the method 800, or an alternative method.

Referring to Fig. 8, at block 802, the method 800 may include receiving a notification from the edge device 106-1 indicating an update in the IP address of the edge device 106-1. In an example, the notification includes an updated IP address of the edge device 106-1. In an example, the notification may be received at the system 108 from the edge device 106-1

At block 804, the method 800 may include retrieving the device address associated with the edge device 106-1. In an example, the device registration module 204 may fetch the device address associated with the edge device 106-1 for which a change in the IP address has been detected.

At block 806, the method 800 may include updating the mapping between the device address and the updated IP address. In an example, upon retrieving the device address, the device registration module 204 may update the system database 112 to associate the updated IP address with the existing device address. In an example, this update ensures that future access requests to the edge device 106-1 resolve correctly without service disruptions. In an example, while updating the IP address of the edge device 106-1, the device registration module 204 maintaining the association of the identity certificate with the device address. Since the identity certificate is issued for the device address rather than a specific IP address, the identity certificate remains valid even after an IP address change. This prevents authentication errors or security warnings when the edge device 106-1 is accessed by user devices, such as the user device 432.

At block 808, the method 800 may include sending a confirmation message to the edge device 106-1. In an example, once the updated mapping is successfully stored in the system 108, the device registration module 204 may send a notification to the edge device 106-1, confirming the update of its IP address in the system 108 records. This ensures the edge device 106-1 is aware of the successful update and may continue operations without requiring additional reconfiguration.

Accordingly, updating the change in the IP address automatically ensures that the edge device 106-1 remains accessible without service disruptions, even when the IP address of the edge device 106-1 changes due to network reconfiguration, DHCP lease renewal, or device mobility. Since the identity certificate is issued for the device address rather than the IP address, the certificate remains valid, preventing authentication errors or browser security warnings. This mechanism enables uninterrupted access to the edge device 106-1 by ensuring that any requests to the device address are correctly resolved to the updated IP address, allowing secure and trusted communication without requiring manual intervention.

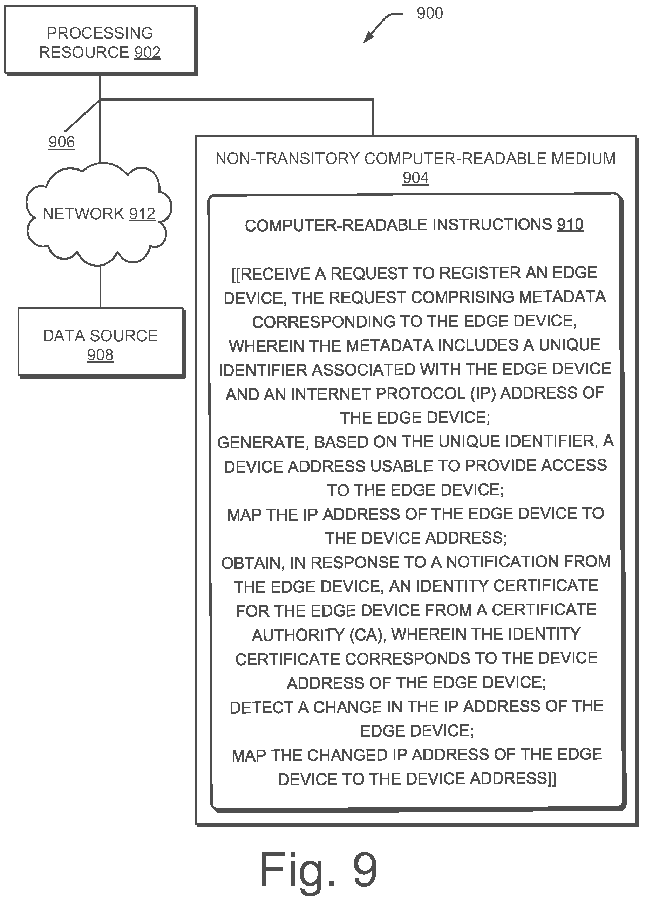

Figure 9 illustrates a computing environment 900 for managing access to edge devices, such as the edge device 106-1, according to an example implementation of the present subject matter. In an example implementation, the computing environment 900 may include a computing device, such as the above-described system 108, which may be a cloud based server. The computing environment 900 includes a processing resource 902 communicatively coupled to the non-transitory computer-readable medium 904 through a communication link 906.

In an example, the processing resource 902 may be a processor of the computing device, such as the processor 302 of the system 108, that fetches and executes computer-readable instructions from the non-transitory computer-readable medium 904.

The non-transitory computer-readable medium 904 may be, for example, an internal memory device or an external memory device. In an example implementation, the communication link 906 may be a direct communication link, such as any memory read/write interface. In another example implementation, the communication link 906 may be an indirect communication link, such as a network interface. In such a case, the processing resource 902 can access the non-transitory computer-readable medium 904 through a network 912. The network 912 may be a single network or a combination of multiple networks and may use a variety of different communication protocols.

The processing resource 902 and the non-transitory computer-readable medium 904 may also be communicatively coupled to data sources 908. In an example implementation, the non-transitory computer-readable medium 904 includes executable instructions 910 for implementing the process of accessing the edge device 106-1 in a manner that minimizes latency, enhances security, and ensures efficient data retrieval. The executable instructions 910 may include algorithms for dynamically selecting the efficient communication pathway based on network conditions, and prioritizing secure authentication using identity certificates.

In an embodiment, the instructions 910 may cause the processing resource 902 to receive a request to register the edge device 106-1. In an example, the request may include metadata corresponding to the edge device 106-1. In an example, the metadata may include a unique identifier associated with the edge device 106-1 and an internet protocol (IP) address of the edge device 106-1. In an embodiment, the instructions 910 may cause the processing resource 902 to generate, based on the unique identifier, a device address usable to provide access to the edge device. The device address may be understood as a unique identifier assigned to the edge device 106-1 within the system 108, which remains consistent even if the IP address of the edge device 106-1 changes. In other words, the device address serves as an abstraction layer that allows communication with the edge device 106-1 without relying on dynamically assigned IP address of the edge device 106-1. For example, in an loT system, a smart sensor deployed in a factory may be assigned a device address such as sensor123.factory.com. Even if IP address of the sensor changes, for example, due to DHCP lease renewal, the device address of the sensor remains the same, ensuring continuous accessibility.

In an embodiment, the instructions 910 may cause the processing resource 902 to, upon receiving the request to register the edge device 106-1, send a request to a domain name system (DNS) server for a subdomain address. In an example, the processing resource 902 may obtain the subdomain address from the DNS server. In an example, the subdomain address includes a predefined domain structure. The processing resource 902 executes the instructions 910 to generate the device address by combining the unique identifier of the edge device 106-1 with the obtained subdomain address.

In an embodiment, the instructions 910 may further cause the processing resource 902 to map the IP address of the edge device to the device address. In an embodiment, the instructions 910 may be executable by the processing resource 902 to obtain, in response to a notification from the edge device, an identity certificate for the edge device from a certificate authority (CA), such as the CA server 114, such that, the identity certificate corresponds to the device address of the edge device 106-1.

In an embodiment, to receive the identity certificate from the CA server 114, the instructions 910 may further cause the processing resource 902 to, in response to sending the request to the CA server 114 to issue the identity certificate, receive a DNS challenge from the CA server 114 for the device address. In an example, the DNS challenge enables the CA to validate ownership of the device address. In an embodiment, the processing resource 902 executed instructions 910 to complete the DNS challenge corresponding to the device address. In an example, completing the DNS challenge includes hosting a response to the DNS challenge on the DNS server.

In an embodiment, the instructions 910 cause the processing resource 902 to notify the CA server 114 regarding the completion of the DNS challenge. In an example, the CA server 114 is to validate the completion of the DNS challenge by querying the DNS server. Furthermore, in an embodiment, the processing resource 902 is to receive the identity certificate for the device address from the CA server 114 upon successful validation of the DNS challenge.

In an embodiment, the instructions 910 may cause the processing resource 902 to detect a change in the IP address of the edge device 106-1. In an embodiment, the instructions 910 may cause the processing resource 902 to map the changed IP address of the edge device 106-1 to the device address. Thus, by keeping the identity certificate associated with the device address irrespective of the change in the IP address of the edge device 106-1, the present subject matter ensures that secure authentication and access control remain uninterrupted, preventing the need for re-registration or manual intervention.

In an embodiment, upon receiving a request from a user device, such as the user device 432 to access data from the edge device 106-1, the instructions 910 may cause the processing resource 902 to determine if the user device 432 and the edge device 106-1 are in a same network, such as a local area network implemented within the premises 102. In an example, the instructions 910 may be executable by the processing resource 902 to retrieve the device address associated with the edge device 106-1 and redirect the user device 432 to the device address. In an example, the user device 432 is to access to the data from the edge device 106-1 based on the identity certificate.

In an embodiment, if it is determined that the user device 432 and the edge device 106-1 are in different networks, the instructions 910 may cause the processing resource 902 to connect to the edge device 106-1 using the IP address mapped to the device address. In an example, the instructions 910 may cause the processing resource 902 is to receive the data from the edge device and relay the received data to the user device.

In an embodiment, the instructions 910 may cause the processing resource 902 to send a request to the CA server 114 to renew the identity certificate before expiry of a predefined validity period of the identity certificate. In an example, the processing resource 902, upon receiving the renewed identity certificate from the CA server 114, may update the device address with the renewed identity certificate. This ensures that secure authentication and encrypted communication with the edge device 106-1 remain uninterrupted, preventing service disruptions due to an expired certificate. By automating the renewal and updating process, the present subject matter minimizes manual intervention, and ensures continuous compliance with authentication protocols, even in scenarios where the edge device 106-1 undergoes network changes or dynamic IP updates.

Thus, the present subject matter provides for managing the process of accessing the edge devices by automating device authentication, network adaptation, and secure data transmission. This is achieved through dynamic IP mapping, identity certificate validation, and intelligent access control mechanisms. Although implementations of this optimization technique have been described in language specific to structural features and/or methods, it is to be understood that the appended claims are not necessarily limited to the specific features or methods described. Rather, the specific features and methods are disclosed as example implementations of an optimized approach for seamless and secure communication between devices across different networks, ensuring efficiency, reliability, and enhanced security.

## Claims

1. A system for managing access to edge devices, comprising:
at least one processor;
a communication module, coupled to the at least one processor, to receive a request to register an edge device, the request comprising metadata corresponding to the edge device, wherein the metadata includes a unique identifier associated with the edge device and an internet protocol (IP) address of the edge device;
a device registration module, coupled to the at least one processor, to:
generate, based on the unique identifier, a device address for the edge device, the device address is to provide access to the edge device; and
map the IP address to the device address; and
a certification management module, coupled to the at least one processor, to:
receive, from the edge device, a notification to generate an identity certificate for the device address;
in response to the notification, obtain the identity certificate for edge device corresponding to the device address from a certificate authority (CA) server; and
associate the identity certificate with the edge device;
wherein the device registration module is further to:
receive, from the edge device, an updated IP address for the edge device; and
update the mapping between the device address and the IP address to reflect the updated IP address.

2. The system of claim 1, further comprising an access control module, coupled to the at least one processor, to:
upon receiving a request from a user device to access data from the edge device, determine if the user device and the edge device are in a same network; and
if the user device and the edge device are determined to be in the same network, redirect the user device to the device address, wherein the user device is to access the data from the edge device based on the identity certificate.

3. The system of claim 2, wherein, upon determining that the user device and the edge device are on different networks, the access control module is to:
connect to the edge device using the IP address mapped to the device address;
receive the data from the edge device; and
relay the data to the user device.

4. The system of claim 1, wherein, to generate the device address, the device registration module is to:
upon receiving the request to register the edge device, send a request to a Domain Name System (DNS) server for a subdomain address;
obtain the subdomain address from the DNS server, wherein the subdomain address comprises a predefined domain structure; and
generate the device address by combining the unique identifier of the edge device with the obtained subdomain address.

5. The system of claim 4, wherein, to obtain the identity certificate from the CA server, the certification management module is further to:
send a request to the CA server to issue the identity certificate;
in response to the request, receive a DNS challenge from the CA server for the device address, the DNS challenge is to validate ownership of the device address;
complete the DNS challenge corresponding to the device address, wherein completing the DNS challenge comprises hosting a response to the DNS challenge on the DNS server;
notify the CA server regarding the completion of the DNS challenge, wherein the CA server is to validate the completion of the DNS challenge by querying the DNS server; and
receive the identity certificate for the device address from the CA server upon successful validation of the DNS challenge, wherein the identity certificate is associated with the device address such that an update in the IP address of the edge device does not update the mapping of the identity certificate with the edge device.

6. The system of claim 5, wherein the DNS challenge follows an automated certificate management environment (ACME) protocol.

7. The system of claim 1, wherein the certification management module is further to:
send a request to the CA server to renew the identity certificate before expiry of a predefined validity period of the identity certificate; and
upon receiving a renewed identity certificate from the CA server, update the device address with the renewed identity certificate.

8. A method for managing access to edge devices, comprising:
receiving, by a system, a request to register an edge device, the request comprising a unique identifier of the edge device and an internet protocol (IP) address of the edge device;
generating, by the system, a device address for the edge device based on the unique identifier, wherein the device address is to provide access to an embedded server of the edge device;
mapping, by the system, the IP address to the device address;
receiving, by the system, a notification from the edge device to generate an identity certificate for the device address;
sending, by the system, a request to a certificate authority (CA) server to issue the identity certificate for the device address;
associating, by the system, the identity certificate with the edge device upon receiving the identity certificate from the CA server;
detecting, by the system, an update to the IP address of the edge device; and
updating, by the system, the mapping between the device address and the updated IP address, while maintaining the association of the identity certificate with the edge device unaltered.

9. The method of claim 8, wherein generating the device address comprises:
obtaining a subdomain address from a Domain Name System (DNS) server, wherein the subdomain address comprises a predefined domain structure; and
generating the device address by combining the unique identifier of the edge device with the obtained subdomain address.

10. The method of claim 8, further comprising:
upon receiving a request from a user device to access data from the edge device, determining, by the system, the user device and the edge device to be in a same network;
retrieving, by the system, the device address associated with the edge device;
redirecting, by the system, the user device to the device address;
accessing, by the user device, the IP address of the edge device based on the device address to establish a communication channel between the user device and the edge device; and
accessing, by the user device, the data from the edge device via the communication channel.

11. The method of claim 10, further comprising:
upon determining that the user device and the edge device are in different networks, connecting to the edge device using the IP address mapped to the device address;
receiving, by the system, the data from the edge device; and
relaying, by the system, the received data to the user device.

12. The method of claim 9, wherein receiving the identity certificate from the CA server comprises:
in response to sending the request to the CA server to issue the identity certificate, receiving a DNS challenge from the CA server for the device address, the DNS challenge is to validate ownership of the device address;
completing the DNS challenge corresponding to the device address, wherein completing the DNS challenge comprises hosting a response to the DNS challenge on the DNS server;
notifying the CA server regarding the completion of the DNS challenge, wherein the CA server is to validate the completion of the DNS challenge by querying the DNS server; and
receiving the identity certificate for the device address from the CA server upon successful validation of the DNS challenge, wherein the identity certificate is to remain associated with the device address irrespective of a change in the IP address of the edge device.

13. The method of claim 8, further comprising:
sending a request to the CA server to renew the identity certificate before expiry of a predefined validity period of the identity certificate; and
upon receiving a renewed identity certificate from the CA server, updating the device address with the renewed identity certificate.

14. A non-transitory computer-readable medium comprising instructions that, when executed by a processing resource, cause the processing resource to:
receive a request to register an edge device, the request comprising metadata corresponding to the edge device, wherein the metadata includes a unique identifier associated with the edge device and an internet protocol (IP) address of the edge device;
generate, based on the unique identifier, a device address usable to provide access to the edge device;
map the IP address of the edge device to the device address;
obtain, in response to a notification from the edge device, an identity certificate for the edge device from a certificate authority (CA), wherein the identity certificate corresponds to the device address of the edge device;
detect a change in the IP address of the edge device; and
map the changed IP address of the edge device to the device address.

15. The non-transitory computer-readable medium of claim 14, wherein to generate the device address, the processing resource is to:
upon receiving the request to register the edge device, send a request to a Domain Name System (DNS) server for a subdomain address;
obtain the subdomain address from the DNS server, wherein the subdomain address comprises a predefined domain structure; and
generate the device address by combining the unique identifier of the edge device with the obtained subdomain address.

16. The non-transitory computer-readable medium of claim 14, further comprising instructions that, when executed by the processing resource, cause the processing resource to:
upon receiving a request from a user device to access data from the edge device, determine the user device and the edge device to be in a same network;
retrieve the device address associated with the edge device; and
redirect the user device to the device address, wherein the user device is to access to the data from the edge device based on the identity certificate.

17. The non-transitory computer-readable medium of claim 16, further comprising instructions that, when executed by the processing resource, cause the processing resource to, upon determining that the user device and the edge device are in different networks:
connect to the edge device using the IP address mapped to the device address;
receive the data from the edge device; and
relay the received data to the user device.

18. The non-transitory computer-readable medium of claim 15, wherein to receive the identity certificate from the CA, the processing resource is to:
in response to sending the request to the CA to issue the identity certificate, receive a DNS challenge from the CA for the device address, the DNS challenge is to validate ownership of the device address;
complete the DNS challenge corresponding to the device address, wherein completing the DNS challenge comprises hosting a response to the DNS challenge on the DNS server;
notify the CA regarding the completion of the DNS challenge, wherein the CA is to validate the completion of the DNS challenge by querying the DNS server; and
receive the identity certificate for the device address from the CA upon successful validation of the DNS challenge, wherein the identity certificate is to remain associated with the device address irrespective of the change in the IP address of the edge device.

19. The non-transitory computer-readable medium of claim 18, wherein the DNS challenge follows an automated certificate management environment (ACME) protocol.

20. The non-transitory computer-readable medium of claim 14, further comprising instructions that, when executed by the processing resource, cause the processing resource to:
send a request to the CA to renew the identity certificate before expiry of a predefined validity period of the identity certificate; and
upon receiving the renewed identity certificate from the CA, update the device address with the renewed identity certificate.
